# EUROPÄISCHE PATENTSCHRIFT

(11) **EP 3 948 577 B1**
(45) Veröffentlichungstag und Bekanntmachung des Hinweises auf die Patenterteilung: **06.05.2026**
(21) Anmeldenummer: 20717584.5
(22) Anmeldetag: 31.03.2020
(51) Int. Cl.: G06F 16/31, G06F 16/38, G06N 3/08

(54) **AUTOMATISIERTES MASCHINELLES LERNEN AUF BASIS GESPEICHERTEN DATEN**
AUTOMATED MACHINE LEARNING ON THE BASIS OF STORED DATA
APPRENTISSAGE AUTOMATISÉ PAR MACHINE SUR LA BASE DE DONNÉES STOCKÉES

(30) Priorität: 04.04.2019 DE 102019108857
(43) Veröffentlichungstag der Anmeldung: 09.02.2022
(73) Patentinhaber: Bundesdruckerei GmbH, 10969 Berlin (DE)
(72) Erfinder: WILKE, Andreas, 13509 Berlin (DE); KOMAROV, Ilya, 13507 Berlin (DE)
(74) Vertreter: Richardt Patentanwälte PartG mbB
(86) Internationale Anmeldenummer: PCT/EP2020/059040
(87) Internationale Veröffentlichungsnummer: WO 2020/201247

(56) Entgegenhaltungen:
- DE-A1- 102010 043 265
- DE-A1- 102010 043 265
- DE-A1- 102016 226 338
- DE-A1- 102016 226 338
- DE-A1- 102017 208 084
- DE-A1- 19 627 472
- DE-A1- 19 627 472

## Beschreibung

Die Erfindung betrifft ein Verfahren und ein Computersystem zum automatisierten maschinellen Lernen.

Aus dem Stand der Technik sind Verfahren und Systeme zum maschinellen Lernen System bekannt. Solche Systeme lernen anhand von Beispielen und können diese Beispiele nach Beendigung der Lernphase verallgemeinern und auf bisher unbekannte Daten anwenden. Die zugrundeliegenden Beispiele werden dabei nicht auswendig gelernt, sondern es werden Muster und Gesetzmäßigkeiten innerhalb der als Lerndaten dienenden Beispiele ermittelt. Dies ermöglicht es entsprechenden Systemen im Zuge eines Lerntransfers die erlernten Muster und Gesetzmäßigkeiten zur Beurteilung bisher unbekannter Daten heranzuziehen.

Bekannte Verfahren und Systeme für maschinelles Lernen arbeiten aufgrund der verwendeten Datenspeicherstrukturen im Allgemeinen nicht auf der gesamten zur Verfügung stehenden Datenmenge. Für das Lernen wird eine Auswahl an Beispielen getroffen, mit welchen das System in der Lernphase trainiert wird. Die aus der beschränkten Auswahl im Zuge des Lernens erfassten Muster und Gesetzmäßigkeiten werden dann sukzessiv auf Teile des restlichen Datenbestands bzw. neuerfasste Daten angewendet, wobei alle Daten gleichwertig behandelt werden.

Die DE 10 2016 22 6338 A1 beschreibt ein computerimplementiertes Verfahren zur Datenklassifikation. Das Verfahren umfasst ein Bereitstellen einer Tokenmenge, die Token beinhaltet, die aus mehreren Feldwerten mehrerer Datensätze durch Tokenisierung erzeugt wurden, wobei die Token aus Feldwerten von mindestens zwei unterschiedlichen Feldtypen erzeugt wurden, wobei die Token in Form einer Bitsequenz gespeichert sind; eine Analyse von einem oder mehreren Merkmalen der Token auf der Ebene der Bitsequenz, um Teilmengen merkmalsähnlicher Token zu identifizieren, wobei die Merkmale die Bitsequenz der Token und/oder die Länge der Bitsequenz umfassen; ein Speichern einer Kopie jeder der Teilmengen merkmalsähnlicher Token in nach Teilmengen getrennter Form, wobei jede Teilmengenkopie jeweils eine Klasse merkmalsähnlicher Daten repräsentiert.

Die DE 196 27 472 A1 beschreibt ein Verfahren zur Durchführung von Operationen in einem Datenbanksystem, in dem eine Vielzahl von Datensätzen in einem Speicher eines Computers gespeichert werden, wobei jeder Datensatz aus einer beliebigen Anzahl von Feldern besteht, die jeweils aus einer Feldbeschreibung als Metadaten und einer beliebigen Anzahl von Feldinhalten bestehen, und wobei bei jeder Speicherung eines Datensatzes in einem Speicher eines Computers die Feldinhalte zusammen mit den zugehörigen Metadaten als ein Datensatz abgespeichert werden.

Die DE 10 2010 043265 A1 beschreibt ein computerimplementiertes Verfahren zum Indizieren von Daten zur Verwendung durch mehrere Anwendungen, welches ein Empfangen eines Datenobjekts in einer ersten Anwendung von mehreren Anwendungen umfasst. Es erfolgt ein Tokenisieren des Datenobjekts gemeinsamer Form, um Token aus dem Datenobjekt zu extrahieren und einen Index der aus dem Datenobjekt extrahierten Token zu erzeugen, wobei der Index formatiert wird, um durch jede der mehreren Anwendungen benutzt zu werden. Ferner wird der Index in einer Datenbank gespeichert, die den mehreren Anwendungen, welche zwei oder mehr Anwendungstypen umfassen, zugänglich ist.

Die DE 10 2017 208084 A1 beschreibt ein erstes Datenverarbeitungssystem mit einem ersten DBMS und einer ersten Echtzeituhr. Das erste DBMS umfasst eine erste Datenbank mit einer Vielzahl von Datensätzen. Die Datensätze beinhalten jeweils mehrere Feldwerte und damit verknüpft gespeicherte Zeitstempel. Das erste DBMS ist konfiguriert zum: Empfangen eines ersten Schreibkommandos zum Ändern eines Feldwerts eines der Datensätze der ersten Datenbank; als Antwort auf den Empfang des ersten Schreibkommandos: Empfangen einer aktuellen Zeit von der ersten Echtzeituhr, Speichern einer Kopie des Datensatzes, dessen Feldwert durch das Schreibkommando geändert werden soll, in die ersten Datenbank, wobei die Datensatzkopie einen gemäß dem ersten Schreibkommando geänderten Feldwert anstatt des bisherigen Feldwerts aufweist, wobei der geänderte Feldwert mit einem Zeitstempel, der die von der ersten Echtzeituhr empfangene aktuelle Zeit angibt, verknüpft gespeichert ist, wobei ein oder mehrere der anderen Feldwerte der Datensatzkopie jeweils mit einem Zeitstempel verknüpft gespeichert sind, der eine andere Zeit angibt, oder wobei alle anderen Feldwerte der Datensatzkopie jeweils mit einem Zeitstempel, der die von der ersten Echtzeituhr bestimmte Zeit angibt, verknüpft gespeichert sind; wobei das erste DBMS eine Importschnittstelle beinhaltet, die zum Import von weiteren Datensätzen, die jeweils aus mehreren Feldwerten und mit den Feldwerten verknüpften Zeitstempeln bestehen, in die erste Datenbank ausgebildet ist.

Der Erfindung liegt die Aufgabe zugrunde, ein verbessertes Verfahren zum automatisierten maschinellen Lernen zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein computerimplementiertes Verfahren zum automatisierten maschinellen Lernen, wobei das Verfahren umfasst:
- Bereitstellen eines vortrainierten Lernmoduls zum maschinellen Lernen,
- Bereitstellen einer Datenbank, welche von einem Multi-Modell-Datenbankmanagementsystem verwaltet wird, wobei die Datenbank eine Mehrzahl von Datensätze umfasst, welche in einem dokumentenorientierten Datenmodell gespeichert sind, wobei die gespeicherten Datensätze jeweils ein oder mehreren Feldwerte umfassen, wobei die einzelnen Feldwerte der gespeicherten Datensätze jeweils in einem Feld gespeichert sind,
   wobei die Datenbank ferner einen durchsuchbaren Index umfasst, welcher in einem weiteren Datenmodell gespeichert ist, wobei der Index eine Mehrzahl von aus den Feldwerten der gespeicherten Datensätze erzeugten Token umfasst, wobei jedes der Token in dem Index jeweils mit einem oder mehreren Zeigern auf ein oder mehrere der in dem dokumentenorientierten Datenmodell gespeicherten Datensätze verknüpft ist, aus deren Feldwerten das entsprechende Token erzeugt wurde, wobei die Token in dem Index jeweils ein oder mehreren Tokentypen zugeordnet sind,
   wobei zumindest eine Teilmenge der entsprechenden Tokenzuordnungen als gesicherte Fakten klassifiziert sind, wobei die verbleibenden Tokenzuordnungen als vorläufige Annahmen klassifiziert sind,
- Empfangen eines zusätzlichen Datensatzes,
- Speichern des zusätzlichen Datensatzes, welcher ein oder mehrere zusätzliche Feldwerte umfasst, durch das Multi-Modell-Datenbankmanagementsystem in dem dokumentenorientierten Datenmodell der Datenbank,
- Erzeugen von ein oder mehreren Token aus den zusätzlichen Feldwerten,
- Zuordnen der zusätzlichen Token jeweils zu ein oder mehreren Tokentypen durch das Lernmodul,
- Klassifizieren der einzelnen Tokenzuordnungen der zusätzlichen Token jeweils als gesichertes Faktum oder vorläufige Annahme,
- Ergänzen des Index durch das Multi-Modell-Datenbankmanagementsystem unter Verwendung der zusätzlichen Token, eines Zeigers auf den zusätzlichen in dem dokumentenorientierten Datenmodell gespeicherten Datensatz, und der Tokenzuordnungen der zusätzlichen Token.

Ausführungsformen können den Vorteil haben, dass ein für das maschinelle Lernen optimiertes Datenbanksystem verwendet wird. Das entsprechende Datenbanksystem umfasst alle dem maschinellen Lernen zu Grunde liegenden Daten, d.h. sowohl für das Vortrainieren des Lernmoduls verwendeten Daten, als auch Daten, welche durch das vortrainierte Lernmodul verarbeitet werden. Letzter Daten können zum automatisierten maschinellen Lernen verwendet werden. Somit wird ein kontinuierliches Lernen durch das Lernmodul unter Berücksichtigung aller von dem System bzw. dem Lernmodul gesehenen Daten ermöglicht.

Die Datenbank speichert alle empfangenen Datensätze in einem dokumentenorientierten Datenmodell. Ein dokumentenorientiertes Datenmodell bedeutet, dass das Datenmodell keine strukturellen Vorgaben an die zu speichernden Daten stellt.

Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Das Datenbankmanagementsystem ebenso wie das Lernmodul können jederzeit auf die ursprünglichen Datenbestände zurückgreifen und diese in bei der weiteren Verarbeitung berücksichtigen.

Basierend auf diesem Datenpool an Rohdaten, welchen das dokumentenbasierte Datenmodell bereitstellt, wird ein Index erzeugt. Erst auf dieser Ebene werden aus den Datensätze strukturelle Information bzw. Sinnzusammenhänge extrahiert. Hierzu werden die Datensätze durch eine Tokenisierung auf ein elementares Niveau heruntergebrochen, welches die elementaren Bestandteile der Datensätze in Form der Token berücksichtigt.

Die Token werden durch das Lernmodul jeweils ein oder mehreren Tokentypen zugeordnet. Hierzu kann das Lernmodul beispielsweise einen Klassifizierer umfassen und zur Klassifizierung der Token nach Tokentypen konfiguriert sein. Die entsprechende Klassifikation kann beispielsweise Teil einer Mustererkennung sein, bei welcher eine Merkmalsgewinnung durch die Tokenisierung implementiert wird. Basierend auf diese Merkmalsgewinnung erfolgt jedoch keine Merkmalsreduktion im klassischen Sinne, da der vollständige Datenbestand indexiert wird und somit jedes Token zumindest einem Tokentyp zugeordnet wird.

Zudem ist jedes Token in dem Index mit einem oder mehreren Zeigern verknüpft, welche anzeigen, in welchen Datensätzen das entsprechende Token vorkommt. Somit kann jederzeit auf die für einen Token relevanten Rohdaten zugegriffen werden und diese Rohdaten können zur Auswertung in Hinblick auf diesen Token herangezogen werden.

Schließlich werden die Tokenzuordnungen nach gesicherten Fakten und vorläufigen Annahmen differenziert. Ausführungsformen können den Vorteil haben, dass die Verwendung der von dem Lernmodul bestimmten Strukturen und Gesetzmäßigkeiten in den Datensätzen, welche sich in den Tokenzuordnungen niederschlagen, auf gesicherte Fakten beschränkt werden kann, während vorläufige Annahmen hierbei solange außen vorgelassen werden, bis diese ebenfalls als gesicherte Fakten angesehen werden können. Das Verfahren ermöglicht somit ein Lernen und/oder Klassifizieren unter Vorbehalt. Bei gesicherten Fakten handelt es sich um Tokenzuordnungen, welche nicht oder nur unter engen Voraussetzungen geändert werden können. Demgegenüber handelt es sich bei vorläufigen Annahmen um Tokenzuordnungen, welche geändert werden können. Insbesondere handelt es sich um solche Tokenzuordnungen, welche im Zuge des Lernens ohne enge Voraussetzungen erfüllen zu müssen geändert werden können.

Beispielsweise können nur auf Basis anderer gesicherten Fakten geändert werden, d.h. auf Basis von Tokenzuordnungen, welche sich selbst bewährt haben, während vorläufige Annahmen auch auf Basis anderer vorläufiger Annahmen geändert werden können.

Ausführungsformen können daher den Vorteil haben, dass sie dem Lernmodul erlauben auf dem gesamten zur Verfügung stehenden Datenbestand zu arbeiten. Insbesondere können sie den Vorteil haben, ein kontinuierliches Lernen zu ermöglichen, welches sowohl zusätzliche Datensätze als auch bereits gespeicherte Datensätze berücksichtigt. Ausführungsformen können daher den Vorteil haben, dass sie nicht darauf beschränkt sind, dass aus einer zur Verfügung stehenden Gesamtdatenmenge eine Untermenge herausgegriffen wird, um auf dieser zu trainieren.

Ausführungsformen können den Vorteil haben, dass keine zufällige Initialisierung erforderlich ist, wie etwa bei bekannten selbstlernenden Systemen, z.B. neuronalen Netzwerken. Durch das aus dieser zufälligen Initialisierung resultierende Zufallsmoment werden die Entscheidungen/Klassifizierungen eines entsprechenden neuronalen Netzes nicht transparent und nicht nachvollziehbar. Demgegenüber können Ausführungsformen den Vorteil haben, vollständig deterministisch zu sein.

Ausführungsformen können den Vorteil haben, dass ein bereits trainiertes System, d.h. das vortrainierte Lernmodul nachtrainiert bzw. weiter trainiert wird. Die Tokenzuordnungen werden mit zunehmenden Datenvolumen immer zuverlässiger. Zudem können so zusätzliche Strukturen erfasst werden, welche sich bisher noch nicht gezeigt haben. Dadurch kann insbesondere das Faktenwissen nachträglich erweitert werden. Ausführungsformen können also den Vorteil haben, dass ein selbstlernendes System bereitgestellt wird, welches initial festgelegt Fakten verwendet, um kontinuierlich zusätzliches Faktenwissen zu generieren.

Das Lernmodul implementiert einen Algorithmus zum maschinellen Lernen, wobei das Verfahren nicht beschränkt ist auf einen bestimmten Algorithmus. Gemäß Ausführungsformen der Erfindung umfasst das Lernmodul einen speziell für das maschinelle Lernen entwickelten Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Unter einer Multi-Modell-Datenbank wird hier eine Datenbank verstanden, welche dazu konfiguriert ist eine Mehrzahl von unterschiedlichen Datenmodellen zu unterstützen. Eine Multi-Modell-Datenbank ist also dazu konfiguriert Daten in mehr als einem Datenmodell zu speichern, zu indexieren und abzufragen. Datenmodelle sind beispielsweise relational, spaltenorientiert, dokumentenorientiert, graphbasiert, Key-Value-basiert etc. Ein Datenbankmodell legt fest, in welcher Struktur Daten in einem Datenbanksystem gespeichert werden, d.h. in welcher Form die Daten organisiert, gespeichert und bearbeitet werden.

Unter einer Datenbank wird im Folgenden eine (typischerweise große) Menge von Daten verstanden, die in einem Computersystem von einem Datenbankmanagementsystem (DBMS) nach bestimmten Kriterien verwaltet wird. Die Daten sind dabei in einer Vielzahl von Datensätzen organisiert. Unter einem Datenbankmanagementsystem oder DBMS wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS kann es sich vorzugsweise um ein feldorientiertes DBMS handeln, also um ein DBMS, das dazu konfiguriert ist, Teile einzelner Datensätze, sogenannte Feldwerte, in mehreren unterschiedlichen Feldern zu speichern.

Unter einem Datensatz wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar. Beispielsweise kann ein einzelner Datensatz ein bestimmtes physisches Objekt, z.B. eine natürliche Person, repräsentieren. Bei der Person kann es sich z.B. um einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere). Beispielsweise kann ein Datensatz eine Gruppe von inhaltlich zusammenhängenden (zu einem Objekt gehörenden) Datenfeldern repräsentieren, z. B. Artikelnummer, Artikelgröße, Artikelfarbe, Artikelname oder ähnliches. Die Feldtypen ,Name', 'Adresse' und 'Geburtsdatum' könnten z.B. die logische Struktur eines Datensatzes zum Objekttyp "Person" bilden. In der Datenverarbeitung werden Daten in Form von Datensätzen in Datenbanken gespeichert, wobei sie sind Gegenstand der Verarbeitung von Computerprogrammen und werden von diesen erzeugt, gelesen, verändert und gelöscht.

Ein "NoSQL" (englisch für Not only SQL) DBMS ist ein DBMS, welches einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-DBMSs wie MySQL Cluster, Key-Value-Datenbanken wie Chordless, Google BigTable, GT.M, InterSystems Caché, Membase, Redis, sortierte Key-Value-Speicher, Multivalue-Datenbanken, Obektdatenbanken wie Db4o, ZODB, spaltenorientierte Datenbanken und temporale Datenbanken wie Cortex DB.

Ein Index ist eine Datenstruktur, welche eine Suche nach bestimmten Datenwerten durch ein Datenbankmanagementsystem beschleunigt. Ein Index besteht aus einer Ansammlung von Zeigern (Verweisen), die eine Ordnungsrelation auf mehrere (in dem Index gespeicherte) "indizierte" Datenwerte definieren. Beispielsweise werden hierfür B+-Bäume verwendet. Jeder indizierte Datenwert ist mit weiteren Zeigern verknüpft, die auf Datensätze verweisen, in welchen der gefundene indizierte Datenwert enthalten ist und welche die Datenbasis für die Erstellung des Index darstellten. Datenbankmanagementsysteme verwenden Indizes um als Antwort auf eine Suchanfrage die gewünschten Datensätze schnell zu identifizieren, indem zunächst der Index entlang der Zeiger nach einem Datenwert durchsucht wird, welcher identisch zu einem in der Suchanfrage enthaltenen Referenzwert ist. Ohne Index müssten die von dem DBMS verwalteten Datenwerte eines Feldes sequenziell durchsucht werden, während eine Suche mit Hilfe des Index, z.B. eines B+-Baums, oft nur logarithmische Komplexität hat.

Unter einem Feld wird im Folgenden ein Bereich auf einem logischen oder physikalischen Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Ein Feld ist also ein Element zur Speicherung eines Feldwertes eines Datensatzes gemäß obiger Definition. Felder eines Datensatzes werden von einem DBMS gemeinsam verwaltet.

Ein Feldwert ist ein Datenwert, der Bestandteil eines Datensatzes ist und in einem Feld des Datensatzes gespeichert ist. Ein Feldwert kann aus einem einzigen Wort, einer einzigen Zahl, oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Ein "Tokenisierer" ist eine Programlogik, die Daten, zum Beispiel einen Feldwert, als Input erhält, die Daten analysiert, z.B. um Delimiter oder andere Zerlegungskriterien und Muster zu erkennen, und die Daten dann in ein oder mehrere Token als Ergebnis der Analyse zerlegt und die Token zurückgibt. Es ist auch möglich das nicht alle Daten als Token zurückgegeben werden. Beispielsweise kann ein Volltextindizierer semantisch unbedeutende Stoppwörter erkennen und herausfiltern, sodass diese nicht indiziert werden. Alternativ werden alle Daten als zurückgegeben. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachige Texte an vordefinierten Trennzeichen, z.B. Leerzeichen, Punkten oder Kommata, aufgeteilt werden, die so generierten Bestandteile (Wörter) werden als Token verwendet. Nach Ausführungsformen werden alle Token für die Indizierung verwendet. Es ist auch möglich, dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt für eine Verarbeitung von Suchanfragen eines Client-Computersystems an ein Server-Computersystem vorzugsweise eine gleichartige Verarbeitung des Suchwerts durch das Client-Computersystem oder das Server-Computersystem um sicherzustellen, dass die Suchwerte der Suchanfragen den in dem Index enthaltenen Token entsprechen.

Ein Tokentyp ist eine Kategorie bzw. ein Typ, dem ein bestimmtes Token angehört. Beispielsweise kann ein Tokentyp ein bestimmtes Attribut eines physischen Objekts in Form eines Token repräsentieren. Beispielsweise können zu speichernde Datensätzen, die Attribute von Angestellten enthalten, welche Tokentypen wie "Name", "Pseudonym", "Ausweisnummer"; "Zugriffszertifikat für Raum R", "Zugriffszertifikat für Gerät G", "Zugriffszertifikat für Gebäude GB", "Alter" repräsentieren. Jedes Token kann ein oder mehreren Tokentypen zugeordnet sein. Ferner können Kombinationen von Token als eigenständige Token wiederum ein oder mehreren weiteren Tokentypen zugeordnet sein.

Die empfangenen Datensätze werden unter Verwendung eines dokumentorientierten Datenmodell abgespeichert. Beispielsweise werden alle Feldwerte der abgespeicherten Datensätze als Token in einen mehrdimensionalen Schlüssel/Wert-Speicher (Key/Value-Store) bzw. Key-Value-Datenbanken übertragen. Dabei werden die Token Tokentypen zugeordnet und in einer Form gespeichert, welche die sechste Normalform erfüllt.

Nach Ausführungsformen werden zusätzlich Transaktionszeit und Gültigkeitszeit der Datensätze bitemporal gespeichert. Die Transaktionszeit gibt den Zeitpunkt an, zu dem eine Änderung eines Datenobjekt in der Datenbank erfolgt. Die Gültigkeitszeit gibt einen Zeitpunkt oder Zeitraum an, in dem ein Datenobjekt im modellierten Abbild der realen Welt den beschriebenen Zustand aufweist. Sind sowohl Gültigkeitsals auch Transaktionszeit relevant, spricht man von bitemporal.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

In einem dokumentenorientierte Datenmodell, auch bekannt als Dokumentenspeicher (Document Store), bilden Dokumente bzw. Datencontainer die Grundeinheit zur Speicherung der Daten bilden. Ein dokumentenorientiertes Datenmodell ermöglicht es dokumentenorientierten Informationen, auch bekannt als halbstrukturierte Daten, zu speichern, abzurufen und zu verwalten. Auf einem dokumentenorientierten Datenmodell beruhende Datenbanken gehören zu den NoSQL-Datenbanken und bilden eine Unterklasse der Schlüssel-Wert-Speicher (Key-value Stores). In einem Schlüssel-Wert-Speicher werden die Daten als für die Datenbank inhärent undurchsichtig angesehen, während eine dokumentenorientierte Datenbank auf interne Strukturen in den gespeicherten Dokumenten angewiesen ist, um Metadaten zu extrahieren. Das semistrukturierte Datenmodell ist ein Datenbankmodell, bei dem keine Trennung zwischen den Daten und dem Schema besteht und der Umfang der verwendeten Struktur vom Verwendungszweck der Datenbank abhängt. Jedes Dokument innerhalb des Datenmodells wird über einen eindeutigen Identifikator angesprochen.

Eine Kombination der verschiedenen Datenbankkonzepten ermöglicht es Datensätze als Dokumente bzw. Container zu speichern (document store) und zusätzlich in Form eines Index, z.B. eines Schlüssel-Wert-Speichers, in die 6. Normalform zu überführen. Dieser Schlüssel-Wert-Speicher repräsentiert den gesamten Datenumfang in dem Dokumentenspeicher, während die Originaldatensätze erhalten bleiben.

Nach Ausführungsformen werden Selektionen ausschließlich in dem Schlüssel-Wert-Speicher in der redundanzfreien sechsten Normalform durchgeführt. Erst das Ergebnis wird aus den Containern des Dokumentenspeicher gelesen. Nach Ausführungsformen wird neben Lese- und Schreibrechten in den Datensätzen zusätzlich ein Selektionsrecht auf dem Schlüssel-Wert-Speicher implementiert. Somit kann auch auf dem Index alleine gearbeitet werden, ohne die zugrundeliegenden Daten auslesen zu müssen.

Die vorgeschlagene Multi-Modell-Datenbank stellt somit neben einer schemalosen Datenablage auf Basis eines Dokumentenspeichers eine vollständige Normalisierung des gesamten Datenumfangs in der sechsten Normalform bereit. Ausführungsformen können den Vorteil haben, dass der Index Datenelemente der Datensätze, d.h. Token, als Schlüssel umfasst und jedem dieser Schlüssel jeweils ein oder mehrere Zeiger als Werte zugeordnet sind, welche anzeigen, in welchen Datensätzen und/oder Feldern der Datensätze der entsprechende Schlüssel, d.h. Token/Datenwert, als Feldwert gespeichert ist.

Dieser Index bildet daher über alle Felder der Datensätze und deren Inhalte, d.h. die Feldwerte, die gesamte Datenbank mit allen von ihr umfassten Datensätze ab, so dass alle Abfragen in dem Index behandelt und die schemalos gespeicherten Daten des dokumentenorientierten Datenmodells nur zur Ausgabe der Suchergebnisse verwendet werden. Die geringe Größe des Index im Vergleich zu den schemalosen Daten ermöglicht schnelle Abfragen in beliebigen Abfragekombinationen.

Unter einem Computer bzw. Computersystem wird hier ein Gerät verstanden, welches mittels programmierbarer Rechenvorschriften Daten verarbeitet. Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst. Ein Computer bzw. Computersystem kann eine Kommunikationsschnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich um ein stationäres Computersystem, wie beispielsweise einen Personalcomputer (PC) oder einen in einer Client-Server-Umgebung eingebundenen Client bzw. Server handeln. Ferner kann es sich bei einem Computersystem beispielsweise um ein mobiles Telekommunikationsgerät, insbesondere ein Smartphone, einen tragbaren Computer, wie zum Beispiel einen Laptop PC oder Palmtop-PC, ein Tablet PC, einen Personal Digital Assistant oder dergleichen handeln.

Unter einem Speicher werden hier sowohl flüchtige als auch nicht flüchtige elektronische Speicher bzw. digitale Speichermedien verstanden.

Unter einem nichtflüchtigen Speicher wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem flüchtigen elektronischen Speicher wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem Prozessor wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Nach Ausführungsformen umfasst das Ergänzen des Index:
- Abgleichen der zusätzlichen Token mit dem Index,
- falls eines der zusätzlichen Token nicht in dem Index umfasst ist, Ergänzen des entsprechenden zusätzlichen Tokens unter seinen Tokenzuordnungen in dem Index und Verknüpfen des entsprechenden zusätzlichen Tokens in dem Index mit dem Zeiger auf den zusätzlichen in dem dokumentenorientierten Datenmodell gespeicherten Datensatz,
- falls eine der Tokenzuordnungen eines in dem Index umfassten zusätzlichen Tokens von dem Index nicht umfasst sind, Ergänzen der entsprechenden Tokenzuordnung mit dem entsprechenden zusätzlichen Token in dem Index und Verknüpfen des entsprechenden zusätzlichen Tokens in dem Index mit dem Zeiger auf den zusätzlichen in dem dokumentenorientierten Datenmodell gespeicherten Datensatz,
- falls eines der zusätzlichen Token mit seinen Tokenzuordnungen in dem Index umfasst ist, Verknüpfen des entsprechenden zusätzlichen Tokens in dem Index mit dem Zeiger auf den zusätzlichen in dem dokumentenorientierten Datenmodell gespeicherten Datensatz.

Ausführungsformen können den Vorteil haben, dass Daten aus zusätzlichen Datensätze effizient in die bestehende Datenbank und insbesondere in Index eingefügt werden.

Beispielsweise wird im Zuge des Vortrainierens eine initiale Menge von Datensätzen in dem leeren dokumentenbasierten Datenmodell gespeichert. Diese Datensätze werden tokenisiert und für die resultierenden Token werden Tokenzuordnungen unter Verwendung von initialem Faktenwissen festlegt und ein initialer Index für die initiale Menge von Datensätzen erzeugt. Diese Tokenzuordnungen werden zugleich als gesicherte Fakten klassifiziert bzw. definiert. Das initiale Faktenwissen, bzw. der initiale Index mit den als gesicherte Fakten definierten Tokenzuordnungen wird verwendet, um zusätzliche Datensätze, welche in die Datenbank geladen werden, zu verarbeiten. Insbesondere wird das initiale Faktenwissen verwendet, um Tokenzuordnungen von Token, welche unter Verwendung von zusätzlichen Datensätzen erzeugt werden, entweder als gesicherte Fakten oder als vorläufige Vermutungen zu klassifizieren. Beispielsweise wird automatisch untersucht, ob es sich bei Token aus zusätzlichen Datensätzen bzw. deren Zuordnungen zu Tokentypen um bereits bekannte gesicherte Fakten handelt oder nicht. Falls dies nicht der Fall ist, werden die zusätzlichen Tokenzuordnungen als vorläufige Vermutungen klassifiziert. Ausführungsformen können somit den Vorteil haben, dass unter Verwendung von initial festgelegtem Faktenwissen neue Daten in Vermutungen und Faktenwissen klassifiziert werden können.

Nach Ausführungsformen umfasst das Ergänzen des Index ein Hinzufügen eines zusätzlichen Tokentyps zu dem Index in Form einer zusätzlichen Tokenzuordnung eines aus dem zusätzlichen Datensatz erzeugten zusätzlichen Tokens. Dabei kann es sich bei dem entsprechenden zusätzlichen Token entweder um ein in dem Index bereits umfassten oder einen in dem Index noch nicht umfassten Token handeln.

Beispielsweise erfasst das Lernmodul eine Abhängigkeit zwischen zwei oder mehr Token, welche in den Datensätzen wiederholt in derselben Form zusammen angeordnet sind. Wird ein vordefiniertes Kriterium erfüllt, überschreitet etwa die Anzahl der Wiederholungen einen vordefinierten Schwellwert, so kann das Lernmodul einen neuen Tokentyp einführen, um diese Abhängigkeit im Index zu berücksichtigen. Beispielsweise definiert das Lernmodul eines der Token als Tokentyp für das oder die weiteren Token der entsprechenden Anordnung. Diese zusätzliche Tokenzuordnung wird als vorläufige Annahme klassifiziert. Beispielsweise umfasst eine Mehrzahl von Datensätzen die Formulierung "Stadt XY". Nach Ausführungsformen führt das Lernmodul den zusätzlichen Tokentyp "Stadt" ein und ordnet das Token "XY" diesem zusätzlichen Tokentyp "Stadt" zu.

Zudem kann das Lernmodul dazu konfiguriert sein weitere in dem Index bereits umfasste Token dem zusätzlichen Tokentyp "Stadt" zuzuordnen. Nach Ausführungsformen prüft das Lernmodul, ob weitere in dem Index bereits umfasste Token dem zusätzlichen Tokentyp zuzuordnen sind. Zu diesem Zwecke analysiert das Lernmodul beispielsweise den Index und/oder die zugrundeliegenden Datensätze. Beispielsweise analysiert das Lernmodul alle Datensätze, welche den zusätzlichen Tokentyp als Token umfassen, z.B. das Token "Stadt". Beispielsweise ordnet das Lernmodul alle Token dem zusätzlichen Tokentyp zu, welche in den Datensätzen in derselben oder einer vergleichbaren relativen Anordnung zu dem neuen Tokentyp, alle, z.B. das Token "Stadt, zu finden sind. Beispielsweise findet sich in einem oder mehreren der Datensätze die Formulierung "Stadt YZ". In diesem Fall wird beispielsweise das Token "YZ" ebenfalls als vorläufige Annahme dem Tokentyp "Stadt" zugeordnet. Nach Ausführungsformen werden Token dem zusätzlichen Tokentyp zugeordnet, welche in derselben und/oder einer vergleichbaren Anordnung in den Datensätzen mit einer Häufigkeit zu finden sind, welche einen vordefinierten Schwellenwert überschreitet. Nach Ausführungsformen ist dieser Schwellenwert für die Zuordnung kleiner oder gleich dem Schwellenwert für das Hinzufügen eines zusätzlichen Tokentyps. Nach Ausführungsformen werden alle Token auf eine mögliche Zuordnung zu dem zusätzlichen Tokentyp geprüft, welche mit einer ersten Mindestanzahl von Token, welche dem zusätzlichen Tokentyp bereits zugeordnet sind bereits eine zweite Mindestanzahl an Tokenzuordnungen gemeinsam haben. Nach Ausführungsformen beträgt die erste und/oder zweite Mindestanzahl beispielsweise Eins oder mehr, wie etwa Zwei, Drei, Vier, Fünf, Sech, Sieben, Acht, Neuen, Zehn.

Nach Ausführungsformen umfasst das Klassifizieren:
- Abgleichen der Tokenzuordnungen der zusätzlichen Token mit dem Index,
- falls eine der Tokenzuordnungen eines der zusätzlichen Token in dem Index als gesichertes Faktum klassifiziert umfasst ist, Klassifizieren der entsprechenden Tokenzuordnung des entsprechenden zusätzlichen Tokens als gesichertes Faktum,
- falls eine der Tokenzuordnungen eines der zusätzlichen Token in dem Index nicht oder als vorläufige Annahme klassifiziert umfasst ist, Klassifizieren der entsprechenden Tokenzuordnung des entsprechenden zusätzlichen Tokens als vorläufige Annahme.

Ausführungsformen können den Vorteil haben, dass alle in den zusätzlichen Datensätzen enthaltenen Token effizient entweder als gesicherte Fakten oder als vorläufige Annahmen klassifiziert werden.

Nach Ausführungsformen sind die Tokenzuordnungen der einzelnen Token in dem Index jeweils mit einem Flag versehen, welches anzeigt, ob es sich bei der entsprechenden Tokenzuordnung des entsprechenden Tokens um ein gesichertes Faktum oder eine vorläufige Annahme handelt. Ausführungsformen können den Vorteil haben, dass einfach ablesbar ist, bei welche Tokenzuordnungen der einzelnen Token es sich um gesicherte Fakten handelt und welche Tokenzuordnungen vorläufige Annahmen darstellen.

Nach der beanspruchten Ausführungsform umfasst das Verfahren ferner ein Umklassifizieren einer als eine vorläufige Annahme klassifizierten Tokenzuordnung eines Tokens in dem Index zu einem gesicherten Faktum, falls die entsprechende Tokenzuordnung ein vordefiniertes Kriterium erfüllt. Ausführungsformen können den Vorteil haben, dass sie es ermöglichen den Umfang an gesicherten Fakten in nachvollziehbarer Weise basierend auf dem vorliegenden Datenbestand zu erweitern.

Nach Ausführungsformen umfasst das vordefinierte Kriterium, dass die entsprechende Tokenzuordnung für das entsprechende Tokens durch das Lernmodul in den gespeicherten Datensätzen für eine vordefinierte Mindestanzahl an Feldwerten und/oder gespeicherten Datensätzen erfolgt ist. Ausführungsformen können den Vorteil haben, dass eine vorläufige Vermutung, welche innerhalb der Datensätzen ausreichend oft erfüllt wird, als gesichertes Fakt anerkannt wird.

Nach der beanspruchten Ausführungsform umfasst das vordefinierte Kriterium, dass eine Mehrzahl von Tokenzuordnungen, welche auf Feldwerten basieren, die in den gespeicherten Datensätzen jeweils innerhalb eines vordefinierten Abstands von den Feldwerten angeordnet sind, auf denen die entsprechende umzuklassifizierende Tokenzuordnung basiert, einen vordefinierten Mindestanteil an als gesicherte Fakten klassifizierten Tokenzuordnungen umfasst. Beispielsweise wird eine als vorläufige Vermutung klassifizierte Tokenzuordnung um klassifiziert, falls innerhalb des vordefinierten Abstands alle Tokenzuordnungen oder ein ausreichend großer Mindestanteil, z.B. 80%, 85%, 90% oder 95%, gesicherte Fakten sind. Ausführungsformen können den Vorteil haben, dass Tokenzuordnungen aus Umgebungen, deren Tokenzuordnungen mit hoher Zuverlässigkeit vollständig oder fast vollständig erfasst sind, mit hoher Wahrscheinlichkeit ebenfalls ein hohes Maß an Zuverlässigkeit aufweisen.

Nach Ausführungsformen bestimmt das Lernmodul zum Zuordnen der zusätzlichen Token zu Tokentypen jeweils anhand des Index, welche Tokenzuordnungen für das entsprechende zusätzliche Token in dem Index bereits umfasst sind, und verwendet die so bestimmten Tokentypen zum Zuordnen. Ausführungsformen können den Vorteil haben, dass so erfasst werden kann, wie häufig eine bestimmte Tokenzuordnung für ein bestimmtes Token in den Datensätzen umfasst ist. Die entsprechende Häufigkeit kann anhand der Anzahl an Zeigern, mit welche das entsprechende Token verknüpft ist, bestimmt werden. Nach Ausführungsformen erfolgt die Verknüpfung mit den Zeigern für die Token jeweils in Abhängigkeit von dem Tokentyp bzw. der Tokenzuordnung.

Nach Ausführungsformen bestimmt das Lernmodul zum Zuordnen der zusätzlichen Token zu Tokentypen jeweils anhand des Index alle gespeicherten Datensätze, in welchen das entsprechende zusätzliche Token umfasst ist, und verwendet die so bestimmten Datensätze zum Zuordnen. Ausführungsformen können den Vorteil haben, dass für die Zuordnung alle Datensätze berücksichtigt werden, welche das entsprechende Token umfassen. Mit anderen Worten kann so sichergestellt werden, dass für die Tokenzuordnung alle Datensätze berücksichtigt werden, welche in einem direkten Zusammenhang mit dem entsprechenden Token stehen.

Nach Ausführungsformen zieht das Lernmodul zum Zuordnen eines der zusätzlichen Token zu Tokentypen weitere zusätzliche Token heran, bestimmt für die weiteren zusätzlichen Token jeweils anhand des Index alle weiteren gespeicherten Datensätze, in welchen die entsprechenden weiteren zusätzlichen Token umfasst sind, und verwendet die so bestimmten weiteren Datensätze zum Zuordnen. Ausführungsformen können den Vorteil haben, dass die zusätzlichen Token bei der Zuordnung nicht isoliert, sondern in Abhängigkeit bzw. im Kontext mit weiteren zusätzlichen Token betrachtet werden.

Nach Ausführungsformen erfolgt eine Änderung einer als ein gesichertes Faktum klassifizierten Tokenzuordnungen nur auf Basis ein oder mehrerer weiterer als gesicherte Fakten klassifizierten Tokenzuordnungen. Ausführungsformen können den Vorteil haben, dass sichergestellt werden kann, dass Änderungen von als gesicherten Fakten geltenden Tokenzuordnungen nur in begründeten Fällen vorgenommen werden, wenn die Basis für die Änderungen mindestens dieselbe Zuverlässigkeit aufweist, wie die zu ändernden Fakten.

Nach Ausführungsformen verweisen die Zeiger, mit denen die Token in dem Index verknüpft gespeichert sind, jeweils auf ein oder mehrere der Feldwerte in den gespeicherten Datensätze. Ausführungsformen können den Vorteil haben, dass eine feinere Granularität bei der Bestimmung des Ursprungs von Token in den Datensätzen erzielt werden kann. Eine solche feinere Granularität ermöglicht es zudem relative Beziehungen der Token innerhalb der Datensätze aufzuschlüsseln und bei einer Analyse oder sonstigen Verwendung des Index zu berücksichtigen.

Nach Ausführungsformen umfasst das Erzeugen der Token ein Anwenden einer Tokenisierungslogik auf die Feldwerte des zusätzlichen Datensatzes, welche einen Volltextindizierer umfasst, der dazu konfiguriert ist, Texte in Wörter zu zerlegen und die Wörter als Token auszugeben. Ausführungsformen können den Vorteil haben, dass eine effektive Tokenisierung von Texten implementiert werden kann. Nach Ausführungsformen umfassen die Feldwerte des zusätzlichen Datensatzes Volltexte, wobei die Volltexte aus Buchstaben eines oder mehrerer Alphabete gebildete Wörter und/oder ein oder mehrere Zahlen umfassen.

Eine Volltextindizierung beinhaltet eine Zerlegung von Texten in einzelne Wörter, wobei dann die einzelnen Wörter eines Textfeldes in einem diesem Feld zugeordneten Index gespeichert werden. Volltextindexierung wird nur unterstützt wenn das entsprechende Feld zur selektiven Speicherung eines bestimmten Datentyps, z.B. CHAR, VARCHAR oder TEXT, konfiguriert ist. Beispielsweise kann in einem Feld natürlichsprachlicher Text im JSON Format gespeichert sein.

Nach Ausführungsformen umfasst das Erzeugen der Token ein Anwenden einer Tokenisierungslogik auf die Feldwerte des zusätzlichen Datensatzes, welche einen generischen Tokenisierer umfasst, der dazu konfiguriert ist, in den Feldwerten Daten unterschiedlichen Datentyps zu erkennen und aus diesen Token in unterschiedlichen Datentypen zu erzeugen. Ausführungsformen können den Vorteil haben, dass eine effektive Tokenisierung für unterschiedliche Datentypen implementiert werden kann, wie etwa Textdaten, Bilddaten, Audiodaten und/oder Videodaten. Nach Ausführungsformen umfassen die Feldwerte des zusätzlichen Datensatzes Textdaten, Bilddaten, Audiodaten und/oder Videodaten.

Nach Ausführungsformen umfasst das Verfahren ferner:
- Empfangen einer Suchanfrage, wobei die Suchanfrage einen Suchwert beinhaltet,
- Durchsuchen des Index nach dem Suchwert,
- Identifizieren eines Tokens innerhalb des Index, welcher identisch ist mit dem Suchwert,
- Analysieren von Zeigern, mit denen der identifizierte Token verknüpft ist, um ein oder mehrere der Datensätze zu bestimmen, welche ein oder mehrere Feldwerte beinhalten, aus welchen das indizierte Token erzeugt wurde,
- Zurückgeben der bestimmten Datensätze oder von ein oder mehreren Referenzen auf die bestimmten Datensätze als Antwort auf die Suchanfrage.

Ausführungsformen können den Vorteil haben, dass der Index für effektive Suchen in den Datensätzen verwendet werden kann, obwohl diese in ihrer ursprünglichen Form gespeichert sind. So kann beispielsweise das Lernmodul unter Verwendung entsprechender Suchanfragen Muster und/oder Gesetzmäßigkeiten innerhalb der Datensätze suchen.

Nach Ausführungsformen speichert der Index sämtliche aus den Feldwerten der Datensätze einer Datenbank erzeugte Token so, dass der Index jedes Token nur einmal enthält. Jedes Token beinhaltet Zeiger auf ein oder mehrere der Datensätze, aus deren Feldwerten es erzeugt wurde. Wenn ein erfindungsgemäß erzeugter Index also nach einem bestimmten Suchwert durchsucht wird und als Ergebnis der Suche ein in dem Index gespeichertes Token identifiziert wird, welches identisch ist mit dem Suchwert, so verweist dieses Token mittels Zeigern auf sämtliche Datensätze, die dieses Token zumindest einmal in zumindest einem ihrer Feldwerte enthalten und die bei der Erstellung des Index herangezogen wurden. Die Datensätze, die also einen "Treffer" im Hinblick auf den Suchwert darstellen, können anhand der Verweise sehr schnell identifiziert und zurückgegeben werden, ohne dass ein sequenzieller Suchlauf über sämtliche Datensätze notwendig wäre.

Nach Ausführungsformen umfasst der Suchwert ferner eine Zuordnung zu einem Tokentypen und das Identifizieren des Tokens innerhalb des Index erfordert ferner, dass der identifizierte Token dieselbe Tokenzuordnung aufweist. Ausführungsformen können den Vorteil haben, dass nach Token mit bestimmten Tokenzuordnungen, d.h. in individuellen Sinnzusammenhängen, gesucht werden kann.

Nach Ausführungsformen werden bei der Suche in dem Index nur Tokenzuordnungen und Token mit Tokenzuordnungen berücksichtigt, welche als gesicherte Fakten klassifiziert sind. Ausführungsformen können den Vorteil haben, dass die resultierenden Suchergebnisse ein hohes Maß an Zuverlässigkeit aufweisen.

Nach Ausführungsformen umfasst das Verfahren ferner das Vortrainieren des Lernmoduls, wobei das Vortrainieren umfasst:
- Bereitstellen einer Mehrzahl von initialen Datensätzen, welche durch das Multi-Modell-Datenbankmanagementsystem in dem dokumentenorientierten Datenmodell gespeichert werden, wobei die gespeicherten initialen Datensätzen jeweils ein oder mehreren initiale Feldwerte umfassen,
- Erzeugen einer Mehrzahl von initialen Token aus den initialen Feldwerten,
- Zuordnen der initialen Token jeweils zu ein oder mehreren initialen Tokentypen, wobei alle initialen Tokenzuordnungen als gesicherte Fakten festgelegt werden,
- Erzeugen des durchsuchbaren Index unter Verwendung der Mehrzahl von initialen Token durch das Multi-Modell-Datenbankmanagementsystem in dem weiteren Datenmodell, wobei der erzeugte Index die initialen Token umfasst, wobei jedes der initialen Token in dem Index jeweils mit einem oder mehreren Zeigern auf ein oder mehrere der in dem dokumentenorientierten Datenmodell gespeicherten initialen Datensätze verknüpft ist, aus deren initialen Feldwerten das entsprechende initiale Token erzeugt wurde, und wobei die initialen Token in dem Index jeweils ein oder mehreren der als gesicherte Fakten festgelegten Tokenzuordnungen aufweisen.

Ausführungsformen können den Vorteil haben, dass das Lernmodul auf diese Weise effektiv vortrainiert werden kann auf Basis von Faktenwissen. Dieses Faktenwissen kann die Grundlage für das Erlangen weiteren Faktenwissens dienen.

Nach Ausführungsformen werden ein oder mehrere der als gesicherte Fakten festgelegten initialen Tokenzuordnungen für das Vortrainieren des Lernmoduls als vordefinierte Zuordnungen vorgegebene und/oder ein oder mehrere der als gesicherte Fakten festgelegten initialen Tokenzuordnungen werden im Zuge des Vortrainierens durch das Lernmodul bestimmt.

Nach Ausführungsformen umfasst das Erzeugen eines der zusätzlichen Token ein Verwenden eines der Feldwerte des zusätzlichen Datensatzes in seiner Gesamtheit als das entsprechende zusätzliche Token. Es ist durchaus möglich, dass der Index auch Token aus Feldern beinhaltet, auf die keine Tokenisierung angewandt wird bzw. deren Inhalt sich schlichtweg nicht in einzelne Token aufteilen lässt. Nach Ausführungsformen umfasst das Erzeugen eines der zusätzlichen Token ein Aufteilen eines der zusätzlichen Feldwerte des zusätzlichen Datensatzes in eine Mehrzahl von Teilfeldwerten und eine Verwenden eines der Teilfeldwerte als das entsprechende zusätzliche Token.

Ausführungsformen können den Vorteil haben, dass die Granularität der verwendeten Daten bzw. der Tokenisierung unabhängig von der Granularität der Felder angepasst werden kann.

Nach Ausführungsformen speichert der Index sämtliche aus den Feldwerten der gespeicherten Datensätze erzeugten Token so, dass der Index jedes Token für jede der Tokenzuordnungen des entsprechenden Tokens genau einmal enthält. Nach Ausführungsformen ist das weitere Datenmodell so strukturiert, dass die in dem weiteren Datenmodell gespeicherten Token und Tokenzuordnungen des Index die fünfte und/oder sechste Normalform erfüllen. Ausführungsformen können den Vorteil haben, dass Redundanzen vermieden werden können.

Nach Ausführungsformen können die Token und Tokentypen, d.h. die Tokenzuordnungen, in Form von Relationen oder äquivalenten Strukturen gespeichert sein. Unter einer Relation wird hier im Sinn der relationalen Datenbanktheorie ein Menge von Tupel. Ein Tupel ist eine Menge von Attributwerten. Ein Attribut bezeichnet einen Datentyp bzw. eine ein oder mehreren Daten zugeordnete Eigenschaft. Dabei bestimmt die Anzahl der Attribute den Grad, die Anzahl der Tupel die Kardinalität einer Relation.

Unter einer Normalisierung, insbesondere unter einer Normalisierung eines relationales Datenmodells, wird eine Aufteilung von Attributen in eine Mehrzahl von Relationen gemäß einer Normalisierungsregeln verstanden, sodass Redundanzen reduziert bzw. minimiert werden. Ein relationales Datenmodell lässt sich beispielsweise in tabellenartigen Datenstrukturen implementieren, in denen die Relationen in Form von Tabellen, die Attribute in Form von Tabellenspalten und die Tupel in Form von Tabellenzeilen realisiert sind.

Datenredundanzen haben die Gefahr, dass es bei Änderungen von Daten, welche mehrfach umfasst sind, zu Inkonsistenzen kommen kann und Anomalien auftreten. Ferner steigt durch Redundanzen unnötiger Weise der Speicherplatzbedarf. Durch eine Normalisierung können solche Redundanzen verringert bzw. minimiert werden. Ein relationales Datenmodell kann beispielsweise in eine Normalform gebracht werden, indem die Relationen des Datenschemas fortschreitend anhand der für die entsprechende Normalform geltenden funktionalen Abhängigkeiten in einfachere Relationen zerlegt.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF).

Die Normalisierungskriterien nehmen dabei von Normalform zu Normalform zu und umfassen jeweils die Normalisierungskriterien der vorhergehenden Normalformen, d.h. 1NF ⊆ 2NF ⊆ 3NF ⊆ BCNF ⊆ 4NF ⊆ 5NF ⊆ 6NF.

Eine Relation ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attribute, d.h. relationenwertigen Attributwertebereichen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst. Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Nach Ausführungsformen handelt es sich zumindest bei dem von dem Multi-Modell-Datenbankmanagementsystem zum Speichern der Datensätze verwendeten dokumentenbasierten Datenmodellen um ein NoSQL-Datenmodellen. Nach Ausführungsformen handelt es sich bei dem DBMS um ein NoSQL-DBMS. Dies kann vorteilhaft sein, dass da sich herausgestellt hat, dass insbesondere NoSQL-DBMS, die oftmals eine flexiblere Struktur aufweisen als klassische SQL-basierte DBMSs. Aufgrund der Flexibilität ihrer Struktur eignen in sich NoSQL-DBMSs also ganz besonders für die Verwaltung und Speicherung von Datensätzen, aus welchen ein Index gemäß Ausführungsformen der Erfindung erstellt werden kann.

Nach Ausführungsformen weist der Index die Struktur eines Baums auf, insbesondere eines B⁺-Baums. Ausführungsformen können den Vorteil haben, dass eine Baumstruktur insbesondere die Struktur eines B⁺-Baums, eine besonders effiziente und schnelle Suche nach den in dem Index gespeicherten Token ermöglicht. Unter einem B⁺-Baum wird eine Daten- und/oder Indexstruktur, welche eine Erweiterung eines B-Baumes darstellt. Bei einem B⁺-Baum werden die eigentlichen Datenelemente nur in den Blattknoten gespeichert, während die inneren Knoten lediglich Schlüssel enthalten.

Nach Ausführungsformen umfassen mehrerer der in einem dokumentenorientierten Datenmodell gespeicherten Datensätze jeweils eine unterschiedliche Anzahl an Felder. Ausführungsformen können den Vorteil haben, dass Datensätze unterschiedlicher Größen und Strukturierung bzw. Granularität verarbeitet werden können.

Nach Ausführungsformen weisen die Felder jeweils ein gemeinsames, generisches Datenformat auf. Ausführungsformen können den Vorteil haben, dass, da in einem bestimmten Feld eine große Anzahl an unterschiedlichen Datentypen gespeichert werden können. Ein Nutzer bzw. ein Applikationsprogramm, welches Datensätze in der Datenbank speichern will, muss sich also nicht um die Konsistenz und Passung von Datentypen kümmern. Mithin wird kann ein hoher Grad an Flexibilität bezüglich der Struktur und des Umfangs der Datensätze, die von dem Multi-Modell-Datenbankmanagementsystem verwaltet und gespeichert werden können, geboten werden.

Nach Ausführungsformen ist das Lernmodul bzw. das von diesem implementierte maschinelle Lernen konfiguriert für eine Datenextraktion, Konsistenzprüfung, Bilderkennung, Spracherkennung, Sprachsteuerung, Vorrichtungsüberwachung und/oder autonome Vorrichtungssteuerung. Dies kann beispielsweise bereits in der Klassifizierung der Token bestehen, wobei nur als gesicherte Fakten klassifizierte Token für eine weitere Verwendung herangezogen werden. Beispielsweise dienen die gesicherten Fakten als Grundlage für einen darauf angewandten zusätzlichen Algorithmus. Beispielsweise werden auch Vermutungen für eine weitere Verwendung herangezogen, Ergebnisse resultierend aus einem Anwenden eines zusätzlichen Algorithmus auf die Vermutungen im Zuge der weiteren Verwendung werden jedoch als basierend auf Vermutungen gekennzeichnet und/oder mit einem geringeren Gewichtungsfaktor versehen bzw. berücksichtigt als Ergebnisse, welche aus gesicherten Fakten resultieren.

Eine Datenextraktion kann beispielsweise ein Erkennen und Extrahieren eines Musters in einer Text-, Bild-, Audio- oder Videodatei umfassen. Dieses Muster kann beispielsweise durch ein gesichertes Faktum definiert sein und/oder in den klassifizierten Daten erfasst werden. Ein entsprechendes Muster kann beispielsweise ein vorbestimmtes in Form von Sensorwerten erfasstes Ereignis sein, etwa eine Person in einem Wirkbereich einer Vorrichtung.

Eine Konsistenzprüfung kann beispielsweise eine Konsistenzprüfung in einer Text-, Bild-, Audio- oder Videodatei umfassen. Hierbei wird beispielsweise geprüft, ob die entsprechenden Daten unbekannte und damit inkonsistente Daten umfassen, von den restlichen Daten stark abweichende Daten oder als inkonsistent explizit vordefinierte Daten umfassen. Voraussetzung für eine erfolgreiche Konsistenzprüfung ist dass die geprüfte Datei ausschließlich gesicherte Fakten umfasst. Im Zuge einer Konsistenzprüfung werden vorläufige Annahmen als solche identifiziert und hervorgehoben Diese vorläufigen Annahmen erfordern eine explizite Freigabe und optional eine zusätzliche Prüfung Eine entsprechende Konsistenzprüfung kann beispielsweise zur Fehlerprüfung von Steuerungsalgorithmen von Vorrichtungen dienen, zur Fehlfunktionserkennung unter Verwendung von Messdaten einer Funktion einer Vorrichtung oder zum Erkennen von Fehlern in Textdateien, etwa in Form einer Rechtschreibprüfung. Nach der beanspruchten Ausführungsform dient die Konsistenzprüfung zur Fehlfunktionserkennung unter Verwendung der Messdaten der Funktion des Kraftfahrzeugs Vorrichtung und zum Ermöglichen einer vorausschauenden Wartung.

Eine Bilderkennung kann einem Erkennen von Gegenständen, Ereignissen oder Merkmalen in Bild- oder Videodateien dienen. Beispielsweise werden Kontextinformationen zu dem visuell Dargestellten erfasst und/oder dargestellt. Dies kann beispielsweise eine visuelle Darstellung von Informationen, also die Ergänzung von Bildern oder Videos mit computergenerierten Zusatzinformationen oder virtuellen Objekten mittels Einblendung/Überlagerung, umfassen. Ein solches Verfahren wird allgemeine als erweiterter Realität oder Augmented Reality bezeichnet. Ferner kann eine Bilderkennung auf annotierten Bild- oder Videodateien basieren.

Eine Spracherkennung kann einem Erkennen von Sprache in Audiodateien oder Videodateien, etwa zur Sprachsteuerung oder zum Überführen von Sprache in Textform, dienen.

Eine Mustererkennung in Text-, Bild-, Audio- oder Videodatei kann einer Vorrichtungsüberwachung dienen. Insbesondere können so auftretende oder drohende Fehlfunktionen erkannt werden. Dies kann der Sicherheit dienen und ermöglicht eine vorausschauende Wartung (Predictiv Maintenance) der entsprechenden Vorrichtung, da potentielle Probleme frühzeitig erkannt werden können. Bei einer entsprechenden Textdatei handelt es sich beispielswiese um einen Datensatz mit Sensormesswerten. Basierend auf einer Vorrichtungsüberwachung kann zudem eine autonome Vorrichtungssteuerung implementiert werden, etwa eine autonome Steuerung von Fahrzeugen, Robotern oder Industrieanlagen.

Unter einer "Vorrichtung" wird hier allgemein eine technische Vorrichtung verstanden mit Sensoren zur Erfassung von Zustandsdaten der Vorrichtung und einem Vorrichtungscomputersystem zum Protokollieren der erfassten Zustandsdaten. Die Vorrichtung kann auch in dem entsprechenden Computersystem mit Sensorik bestehen. Beispielsweise handelt es sich bei den empfangenen Datensätzen um von einer Vorrichtungscomputersystem unter Verwendung der Sensoren erfasste Datensätze. Eine Vorrichtung umfasst beispielsweise ein Fahrzeug, eine Anlage, wie etwa eine Produktionsanlage, eine Verarbeitungsanlage, eine Förderanlage, eine Energiegewinnungsanlage, eine Wärmegewinnungsanlage, eine Steuerungsanlage, eine Überwachungsanlage, etc. sein. Nach der beanspruchten Ausführungsform ist die Vorrichtung ein Fahrzeug.

Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Nach Ausführungsformen umfasst die Vorrichtung zumindest einen Sensor zum Erfassen von Zustandsdaten der Vorrichtung. Die Zustandsdaten der Vorrichtung werden durch das Vorrichtungscomputersystem von dem zumindest einen Sensor empfangen. Nach Ausführungsformen umfasst die Vorrichtung eine Mehrzahl von Sensoren zum Erfassen von Zustandsdaten der Vorrichtung. Ausführungsformen können den Vorteil haben, dass die vorrichtungseigene Sensorik genutzt werden kann, um den Zustand der Vorrichtung zu erfassen. Der Zustand der Vorrichtung kann beispielsweise beschrieben werden durch Angaben zu Kenngrößen des aktuellen Leistungsvermögens der Vorrichtung, wie etwa Kilometerstand bei einem Fahrzeug, Verbrauchswerte, Leistungswerte, Fehlermeldungen, Ergebnisse vordefinierter Prüfprotokolle und/oder Kennungen von Komponenten der Vorrichtung.

Die beanspruchten Kenngrößen des aktuellen Leistungsvermögens eines Fahrzeugs beinhalten Drehzahl, Geschwindigkeit, Kraftstoffverbrauch, Abgaswerte, Getriebegang Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Durchflussmenge, Schallfeldgrößen, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten Zustände und/oder Zustandsänderung von elektronischen Geräten durch Außeneinflüsse und/oder in Folge einer Benutzung durch einen Nutzer wiedergeben.

Sensoren zum Erfassen von Zustandsdaten in einem Fahrzeug können beispielsweise umfassen: Kurbelwellensensor, Nockenwellensensor, Luftmassenmesser, Lufttemperatursensor, Kühlwassertemperatursensor, Drosselklappensensor, Klopfsensor, Getriebesensor, Wegstreckensensor, Getriebesensor, Niveausensor, Bremsverschleißsensor, Achslastsensor, Lenkwinkelsensor. Diese Sensoren erfassen und überwachen das Fahrverhalten des Fahrzeugs. Aus Abweichungen von Sollwerten und/oder einem Auftreten von bestimmten Mustern lassen sich Fehlfunktionen erkennen und identifizieren. Nach der beanspruchten Ausführungsform lassen sich auch konkrete Fehlerursachen, wie ausgefallene Komponenten des Fahrzeugs, identifizieren. Sensoren können zudem auch Kennungen elektronischer Komponenten, die in das Fahrzeug eingebaut sind abfragen, um deren Identität zu prüfen.

Ausführungsformen umfassen ein Computersystem zum automatisierten maschinellen Lernen, wobei das Computersystem ein oder mehrere Prozessoren, eine Datenbank, welche von ein oder mehrere Datenspeichermedien bereitgestellt wird, ein Multi-Modell-Datenbankmanagementsystem, welches die Datenbank verwaltet und dazu konfiguriert ist, eine Mehrzahl von Datensätze in einem dokumentenorientierten Datenmodell in den Datenspeichermedien zu speichern, wobei die gespeicherten Datensätze jeweils ein oder mehreren Feldwerte umfassen, wobei die einzelnen Feldwerte der gespeicherten Datensätze jeweils in einem Feld gespeichert werden, wobei die Feldwerte der gespeicherten Datensätze jeweils ein oder mehreren Feldtypen einer Mehrzahl unterschiedlicher Feldtypen zugeordnet sind, ein vortrainiertes Lernmodul zum maschinellen Lernen und eine Programmlogik umfasst.

Die Datenbank umfasst ferner einen durchsuchbaren Index, welcher in einem weiteren Datenmodell gespeichert ist, wobei der Index eine Mehrzahl von aus den Feldwerten der gespeicherten Datensätze erzeugten Token umfasst, wobei jedes der Token in dem Index jeweils mit einem oder mehreren Zeigern auf ein oder mehrere der in dem dokumentenorientierten Datenmodell gespeicherten Datensätze verknüpft ist, aus deren Feldwerten das entsprechende Token erzeugt wurde, wobei die Token in dem Index jeweils ein oder mehreren Tokentypen zugeordnet sind.

Zumindest eine Teilmenge der entsprechenden Tokenzuordnungen sind als gesicherte Fakten klassifiziert sind, wobei die verbleibenden Tokenzuordnungen als vorläufige Annahmen klassifiziert.

Die Programmlogik ist zum Ausführen eines Verfahrens zum automatisierten maschinellen Lernen konfiguriert ist, wobei das Verfahren umfasst:
- Empfangen eines zusätzlichen Datensatzes,
- Speichern des zusätzlichen Datensatzes, welcher ein oder mehrere zusätzliche Feldwerte umfasst, durch das Multi-Modell-Datenbankmanagementsystem in dem dokumentenorientierten Datenmodell der Datenbank,
- Erzeugen von ein oder mehreren Token aus den zusätzlichen Feldwerten,
- Zuordnen der zusätzlichen Token jeweils zu ein oder mehreren Tokentypen durch das Lernmodul,
- Klassifizieren der einzelnen Tokenzuordnungen der zusätzlichen Token jeweils als gesichertes Faktum oder vorläufige Annahme,
- Ergänzen des Index durch das Multi-Modell-Datenbankmanagementsystem unter Verwendung der zusätzlichen Token, eines Zeigers auf den zusätzlichen in dem dokumentenorientierten Datenmodell gespeicherten Datensatz, und der Tokenzuordnungen der zusätzlichen Token.

Nach Ausführungsformen ist das Computersystem dazu konfiguriert eine oder mehrere der zuvor genannten Ausführungsformen des Verfahrens zum automatisierten maschinellen Lernen auszuführen.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines exemplarischen Computersystems,
- Figur 2: ein schematisches Blockdiagramme einer exemplarischen Datenverarbeitung durch das Multi-Modell-Datenbankmanagementsystem,
- Figur 3: ein schematisches Blockdiagramm einer Ausführungsform eines exemplarischen Computersystems,
- Figur 4: ein Flussdiagramm einer Ausführungsform eines exemplarischen Verfahrens,
- Figur 5: ein Flussdiagramm einer Ausführungsform eines exemplarischen Verfahrens und
- Figur 6: ein Flussdiagramm einer Ausführungsform eines exemplarischen Verfahrens.

Elemente der nachfolgenden Ausführungsformen, die einander entsprechen, werden mit denselben Bezugszeichen gekennzeichnet.

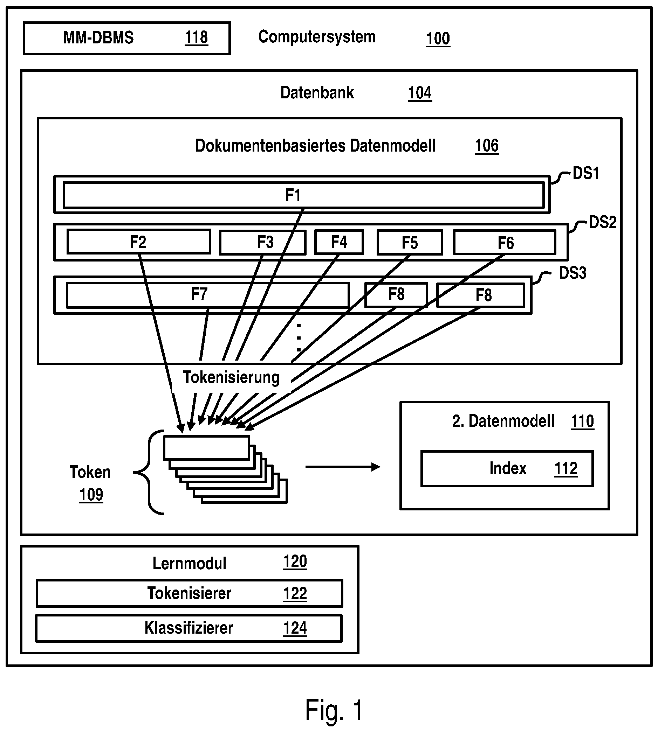

Figur 1 zeigt ein Blockdiagramm einer Ausführungsform eines exemplarischen Computersystems 100 zum automatisierten maschinellen Lernen. Das Computersystems 100 umfasst zumindest eine Datenbank 104 und ein Multi-Modell-Datenbankmanagementsystem (MM-DBMS) 118. Das MM-DBMS 118 verwaltet die, ggf. strukturierte, Speicherung der Daten in der zumindest einen Datenbank 104 und kontrolliert alle lesenden und schreibenden Zugriffe auf die Datenbank 104. Die MM-DBMS 118 unterstützt zumindest zwei Datenmodelle 106, 110, in welchen die Daten in der Datenbank 104 gespeichert werden. Dabei legt das Datenbankmodell fest, in welcher Form die entsprechenden Daten organisiert, gespeichert und bearbeitet werden. Bei einem oder beiden Datenmodellen 106, 110 handelt es sich um NoSQL Datenmodelle. In dieser Hinsicht handelt es sich bei dem MM-DBMS 118 um ein NoSQL DBMS. Das erste Datenmodell 106 ist ein dokumentenbasiertes Datenmodell, in welchem eine Mehrzahl von Datensätzen DS1, DS2, DS3 gespeichert sind. Jeder Datensatz DS1, DS2, DS3 wird in einem Dokument bzw. einem Datencontainer gespeichert. Den Datensätzen DS1, DS2, DS3 selbst wird beim Speichern von dem dokumentenbasiertes Datenmodell 106 keine spezifische Struktur vorgegeben. Mithin können die Datensätzen DS1, DS2, DS3 mit der internen Struktur gespeichert werden, mit welcher die Datensätzen DS1, DS2, DS3 von der Datenbank 104 empfangen werden. Insofern handelt es sich bei den in dem dokumentenbasiertes Datenmodell 106 gespeicherten Datensätzen DS1, DS2, DS3 um Rohdaten. Die Datensätze DS1, DS2, DS3 können beispielsweise Textdaten, Bilddaten, Audiodaten und/oder Videodaten umfassen. Die Datensätze DS1, DS2, DS3 umfassen jeweils zumindest ein Feld F1, ..., F8, mit Feldwerten. Die Datensätze DS1, DS2, DS3 können bereits eine innere Struktur mit einer Mehrzahl von Feldern F1, ..., F8 aufweisen, wenn sie gespeichert werden. Dann umfassen die entsprechenden Datensätze DS1, DS2, DS3 jeweils eine Mehrzahl von Feld F1, ..., F8. Weisen die Datensätze DS1, DS2, DS3 selbst bei ihrem Empfang keine Felder auf, so umfassen sie in gespeicherter Form beispielsweise genau ein Feld, welches den gesamten Datenumfang des entsprechenden Datensatzes DS1, DS2, DS3 umfasst. Die Felder F1, ..., F8 umfassen jeweils ein oder mehrere Feldwerte. Jeder der Feldwerte eines Datensatzes DS1, DS2, DS3 ist in einem entsprechenden Feld, einer Art Datencontainer, gespeichert. Jedes Feld F1, ..., F8 kann einem Feldtyp zugewiesen sein. Dabei können die Felder F1, ..., F8 unterschiedlichen oder alle demselben Feldtyp zugewiesen sein. Die Zusammensetzung der Feldwerte der einzelnen Datensätze DS1, DS2, DS3 kann sich dabei im Hinblick auf deren Feldtypen unterscheiden. Es ist auch möglich das einzelne Datensätze gar keine Felder eines bestimmten Feldtyps beinhalten. In anderen Ausführungsformen (hier nicht gezeigt) können auch mandatorische Feldtypen definiert sein, d.h. dass jedes Dokument ein Feld für jeden mandatorischen Feldtyp umfasst und optional ein oder mehrere weitere Felder für optionale Feldtypen umfasst. Die Daten der Datensätze werden dann in Feldern des für sie vorgesehenen Feldtyps gespeichert, d.h. z.B. Textdaten in einem oder mehreren Textfeldern, Bilddaten in einem oder mehreren Bildfeldern, Audiodaten in einem oder mehreren Audiofeldern und/oder Videodaten in einem oder mehreren Videofeldern.

Ferner umfasst das Computersystem 100 ein Lernmodul zum Verarbeiten der in der Datenbank 104 gespeicherten Daten. Das Lernmodul 120 umfasst beispielsweise zumindest einen Tokenisierer 120 und/oder zumindest einen Klassifizierer 124. Nach alternativen Ausführungsformen kann auch das MM-DBMS 118 den Tokenisierer 122 umfassen und/oder auf einen von dem Lernmodul 120 bereitgestellten Tokenisierer 122 zugreifen.

Das MM-DBMS 118 und/oder das Lernmodul 120 verfügen dabei über eine eingebaute Programlogik, die zur Generierung eines Index 112 konfiguriert ist. Der entsprechende Index 112 wird dabei in einem weiteren Datenmodell 110 bereitgestellt, in welchem die vollständigen Daten der Datensätze DS1, DS2, DS3 in umstrukturierter, redundanzfreier Form gespeichert sind. Zum Erzeugen des Index 112 wird auf den Tokenisierer 122 zugegriffen, welcher dazu konfiguriert ist, die Feldwerte der Feldern F1, ..., F8 der in dem dokumentenbasierten Datenmodell 106 gespeicherten Datensätze 106 zu tokenisieren. Dabei können die resultierenden Token auch mit einem Feldwert eines Feldes bzw. eines Datensatzes identisch sein, falls keine weitere Zerlegung in Token möglich oder sinnvoll ist. Die Tokenisierung kann nach Ausführungsformen auch stufenweise erfolgen, so dass eine immer feinere Zerlegung erfolgt. Mithin umfasst der resultierende Index 112 in diesem Fall Token, welche aus anderen Token zusammengesetzt sind.

Vorzugsweise werden sämtliche oder zumindest die meisten Feldwerte sämtlicher Datensätze DS1, DS2, DS3 der Datenbank 104 tokenisiert, sodass eine umfangreiche Menge an Token 109 entsteht. In Abhängigkeit von der Art der Daten in den einzelnen Feldwerten können die Token 109 eine Mischung aus Zahlen, Buchstabenwörtern, Bildern oder Bildsegmenten, Audiodateien oder Audioelementen oder sonstigen Datenstrukturen beinhalten. Jedes der erzeugten Token wird in dem Index 112 mit einem Zeiger verknüpft gespeichert, wobei der Zeiger auf den Datensatz bzw. das Feld verweist, aus dem das Token entstammt.

Dabei werden die Token in dem Index 112 jeweils einem Tokentyp zugeordnet. Die resultierenden Tokenzuordnungen werden mittels des Klassifizierers 124 des Lernmoduls 120 entweder als gesicherte Fakten oder als vorläufige Annahmen klassifiziert. Die entsprechende Klassifizierung wird für die einzelnen Tokenzuordnungen beispielsweise jeweils mittels eines Flags angezeigt.

Im Zuge der Erzeugung des Index 112 wird aus der Menge an Token 109 eine nichtredundante, unique Token-Menge gebildet, in welcher jedes der Token nur ein einziges Mal vorkommt. Auch wenn ein Token mit einem bestimmten Wert und einer bestimmten Tokenzuordnung mehrfach in der Datenbank 104 bzw. in dem Datenmodell 106 vorkommt, wird es beispielsweise nur ein einziges Mal mit dieser Tokenzuordnung in der nichtredundante Token-Menge und in dem Index 112 gespeichert. Vorzugsweise erfolgt die Speicherung aller Token 109 der nichtredundanten Token-menge in dem Index 112 so, dass die Token 109 nach einem Sortierkriterium sortiert werden und in sortierter Form in der Indexstruktur gespeichert werden. Die Sortierung kann beispielsweise anhand des Alphabets für alphanumerische Daten oder sonstiger, an die Daten angepasste Sortierkriterien erfolgen. Da die Token 109 in dem Index 112 vorzugsweise in sortierter Form gespeichert sind, und weiterhin vorzugsweise in einer Baumstruktur gespeichert sind, ist es sehr schnell möglich, ein bestimmtes Token 109 innerhalb des Index 112 zu identifizieren und dann die Verweise dieses identifizierten Tokens auf ein oder mehrere Datensätze zu verwenden, um sehr schnell diejenigen Datensätze zu identifizieren, die ein bestimmtes, gesuchtes Token enthalten. Es ist also nicht erforderlich, alle Datensätze DS1, DS2, DS3 der Datenbank 104 sequenziell zu durchsuchen.

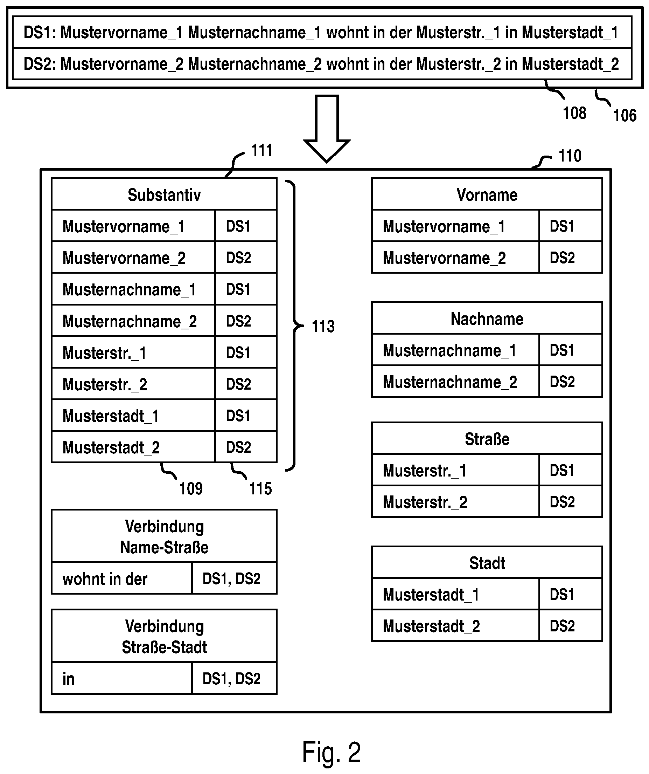

Figur 2 zeigt ein schematisches Blockdiagramme einer exemplarischen Datenverarbeitung durch das Multi-Modell-Datenbankmanagementsystem und das Lernmodul. In einem dokumentenbasierten Datenmodell 106 einer Datenbank sind zwei Dokumente 108 gespeichert. Jedes Dokument 108 umfasst jeweils einen Datensatz DS1, DS2. Der erste Datensatz DS1 umfasst beispielsweise den Satz: "Mustervorname_1 Musternachname_1 wohnt in der Musterstr._1 in Musterstadt_1". Dieser Satz wird mittels Tokenisierers in Token zerlegt: "Mustervorname_1", "Musternachname_1", "wohnt in der", "Musterstr._1", "in", "Musterstadt_1" und in einem Index in dem zweiten Datenmodell 110 gespeichert.

Die Token "Mustervorname_1", "Musternachname_1", "Musterstr._1" und "Musterstadt_1" werden beispielsweise dem Tokentyp "Substantiv" zugeordnet. Zudem wird "Mustervorname_1" dem Tokentyp "Vorname", "Musternachname_1" dem Tokentyp "Nachname", "Musterstr._1" dem Tokentyp "Straße" und "Musterstadt_1" dem Tokentyp "Stadt" zugeordnet. Ferner wird das Token "wohnt in der" dem Tokentyp "Verbindung Name-Straße" zugeordnet, welche angibt, dass links davon ein Name und rechts davon eine Straße steht. Das Token "in" wird dem Tokentyp "Verbindung Straße-Stadt" zugeordnet, welche angibt, dass links davon eine Straße und rechts davon eine Stadt steht. Alle Token werden jeweils mit ihren Zuordnungen in dem zweiten Datenmodell 110 verknüpft mit einem Zeiger auf ihren Speicherort in dem ersten Datenmodell, d.h. DS1, gespeichert.

Die vorgenannten Zuordnungen können beispielsweise inertial erfolgen und als gesicherte Fakten festgelegt werden. Empfängt die Datenbank nun einen zweiten Datensatz DS2 der Form: "Mustervorname_2 Musternachname_2 wohnt in der Musterstr._2 in Musterstadt_2". Dieser Satz wird mittels Tokenisierers in Token zerlegt: "Mustervorname_2", "Musternachname_2", "wohnt in der", "Musterstr._2", "in", "Musterstadt_2" und in redundanzfreier Form ebenfalls in dem zweiten Datenmodell 110 gespeichert.

Die Token "Mustervorname_2", "Musternachname_2", "Musterstr._2" und "Musterstadt_2" kennt das System noch nicht, ordnet diese aber mittels des Lernmoduls als vorläufige Vermutung beispielsweise dem Tokentyp "Substantiv" zu. Hierbei kann das Lernmodul beispielsweise trainiert worden sein, großgeschriebene Worte als Substantive zu erkennen. Ferner wird das Token "wohnt in der" dem Tokentyp "Verbindung Name-Straße" zugeordnet, welche angibt, dass links davon ein Name und rechts davon eine Straße steht. Dabei handelt es sich um ein gesichertes Faktum, welches dem Lernmodul bereits bekannt ist. Ebenso handelt es sich bei dem Token mit der Zuordnung zum Tokentyp "Verbindung Straße-Stadt" um ein bekanntes Faktum. Mithin wird als vorläufige Vermutung das Token "Mustervorname_2" dem Tokentyp "Vorname", das Token "Musternachname_2" dem Tokentyp "Nachname", das Token "Musterstr._2" dem Tokentyp "Straße" und das Token "Musterstadt_2" dem Tokentyp "Stadt" zugeordnet. Grundlage hierfür kann für das Lernmodul beispielsweise sein, dass die Token "Mustervorname_2", "Musternachname_2" links des Tokens "wohnt in der" stehen, während "Musterstr._2" rechts davon steht. Ferner steht "Musterstr._2" links des Tokens "in" und "Musterstadt_2" rechts davon. Grundlage für die Zuordnung der Token "Mustervorname_2" kann "Musternachname_2" zudem sein, dass das Lernmodul trainiert ist im Falle von Substantivpaaren als Name, dass erste Substantiv als Vorname und das zweite Substantiv als Nachname anzusehen.

Alle Token des zweiten Datensatzes DS2 werden ebenfalls in redundanzfreier Form jeweils mit ihren Zuordnungen in dem zweiten Datenmodell 110 verknüpft mit einem Zeiger auf ihren Speicherort in dem ersten Datenmodell, d.h. DS2, gespeichert.

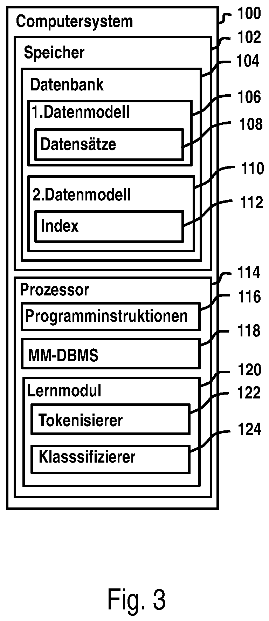

Figur 3 zeigt ein schematisches Blockdiagramm einer Ausführungsform eines exemplarischer Computersystems 110. Das Computersystem 100 umfasst einen Prozessor 114, welcher Programminstruktionen 116, wodurch das Computersystem zum Ausführen des zuvor beschriebenen Verfahrens zum automatisierten maschinellen Lernen veranlasst wird. Im Zuge des Ausführens des Verfahrens führt der Prozessor 114 zudem eine Multi-Modell-Datenbankmanagementsystem 118 und ein Lernmodul 120 zum maschinellen Lernen mit einem Tokenisierer 122 und einem Klassifizierer 124 aus. Ferner umfasst das Computersystems 110 in einem Speicher 102 eine Datenbank 104, welche von dem Multi-Modell-Datenbankmanagementsystem 118 verwaltet wird. Die Datenbank umfasst ein erstes Datenmodell 106, z.B. ein dokumentenorientiertes Datenmodell, in welchem Datensätze 108 gespeichert werden. Ferner umfasst die Datenbank ein zweites Datenmodell 110 mit einem Index 112 aller in den Datensätzen 108 gespeicherten Daten.

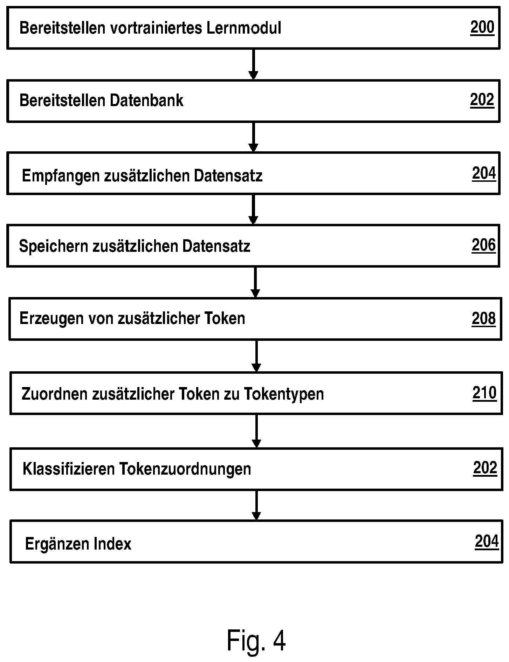

Figur 4 zeigt ein Flussdiagramm einer Ausführungsform eines exemplarischen Verfahrens zum automatisierten maschinellen Lernen. In Block 200 wird ein vortrainiertes Lernmoduls zum maschinellen Lernen bereitgestellt. In Block 202 wird eine Datenbank bereitgestellt. Die Datenbank wird von einem Multi-Modell-Datenbankmanagementsystem verwaltet und umfasst eine Mehrzahl von Datensätze, welche in einem dokumentenorientierten Datenmodell gespeichert sind. Diese gespeicherten Datensätze umfassen jeweils ein oder mehreren Felder mit Feldwerten. Zudem umfasst die bereitgestellte Datenbank einen durchsuchbaren Index aller von den gespeicherten Datensätzen umfassten Daten. Dieser Index wird redundanzfrei in einem weiteren von dem Multi-Modell-Datenbankmanagementsystem verwalteten Datenmodell gespeichert. Der Index umfasst eine Mehrzahl von aus den Feldwerten der gespeicherten Datensätze erzeugten Token die in dem Index jeweils mit einem oder mehreren Zeigern auf ein oder mehrere der in dem dokumentenorientierten Datenmodell gespeicherten Datensätze und/oder Felder verknüpft sind, aus deren Feldwerten das entsprechende Token erzeugt wurde. Zudem sind die Token in dem Index jeweils ein oder mehreren Tokentypen zugeordnet, wobei zumindest eine Teilmenge der entsprechenden Tokenzuordnungen als gesicherte Fakten klassifiziert sind und die verbleibenden Tokenzuordnungen als vorläufige Annahmen klassifiziert sind.

In Block 204 wird ein zusätzlicher Datensatz empfangen und in Block 206 durch das Multi-Modell-Datenbankmanagementsystem in dem dokumentenorientierten Datenmodell der Datenbank gespeichert. Dabei erfolgt die Speicherung in einem Dokument bzw. Datencontainer. In Block 208 werden ein oder mehrere Token aus zusätzlichen Feldwerten erzeugt, welche der zusätzliche Datensatz umfasst. In Block 210 werden diese zusätzlichen Token durch ein Lernmodul jeweils ein oder mehreren Tokentypen zugeordnet. In Block 212 werden die so generierten Tokenzuordnungen der zusätzlichen Token jeweils als gesichertes Faktum oder vorläufige Annahme klassifiziert. Schließlich wird in Block 214 der Index durch das Multi-Modell-Datenbankmanagementsystem unter Verwendung der zusätzlichen Token aus Block 208, eines Zeigers auf den zusätzlichen in dem dokumentenorientierten Datenmodell gespeicherten Datensatz, und der Tokenzuordnungen aus Block 210 ergänzt. Falls Zeiger einzelne Felder des zusätzlichen Datensatzes anzeigen, wird bei einer Mehrzahl von Feldern eine Mehrzahl von Zeigern verwendet.

Dabei kann das Ergänzen in Block 214 ein Abgleichen der zusätzlichen Token mit dem Index umfassen. Falls beispielsweise eines der zusätzlichen Token nicht in dem Index umfasst ist, wird das entsprechende zusätzliche Token unter seinen Tokenzuordnungen in dem Index ergänzt und mit dem Zeiger auf den Datensatz verknüpft. Falls beispielsweise eine der Tokenzuordnungen eines in dem Index umfassten zusätzlichen Tokens von dem Index nicht umfasst ist, wird die entsprechende Tokenzuordnung mit dem entsprechenden zusätzlichen Token in dem Index ergänzt und mit dem Zeiger auf den zusätzlichen in dem dokumentenorientierten Datenmodell gespeicherten Datensatz verknüpft. Falls beispielsweise eines der zusätzlichen Token mit seinen Tokenzuordnungen in dem Index umfasst ist, wird das entsprechende zusätzliche Token in dem Index mit dem Zeiger auf den zusätzlichen Datensatz verknüpft.

Zudem kann das Ergänzen ein Abgleichen der Tokenzuordnungen der zusätzlichen Token mit dem Index umfassen. Falls beispielsweise eine der Tokenzuordnungen eines der zusätzlichen Token in dem Index als gesichertes Faktum klassifiziert umfasst ist, wird die entsprechende Tokenzuordnung des entsprechenden zusätzlichen Tokens ebenfalls als gesichertes Faktum klassifiziert. Falls beispielsweise eine der Tokenzuordnungen eines der zusätzlichen Token in dem Index nicht oder als vorläufige Annahme klassifiziert umfasst ist, wird die entsprechende Tokenzuordnung des entsprechenden zusätzlichen Tokens ebenfalls als vorläufige Annahme gespeichert.

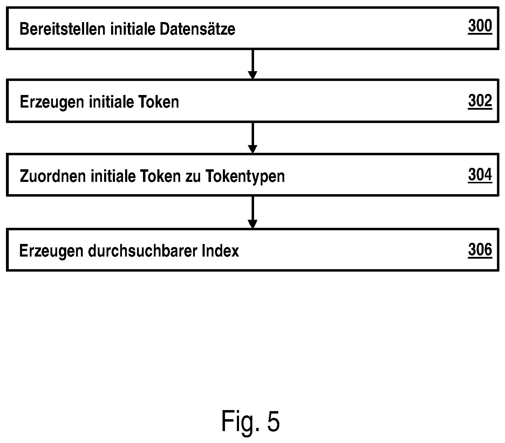

Figur 5 zeigt ein Flussdiagramm einer Ausführungsform eines exemplarischen Verfahrens zum Vortrainieren des Lernmoduls. In Block 300 wird eine Mehrzahl von initialen Datensätzen bereitgestellt. Diese initialen Datensätzen werden durch das Multi-Modell-Datenbankmanagementsystem in dem ersten Datenmodell, z.B. einem dokumentenorientierten Datenmodell gespeichert. In Block 302 wird eine Mehrzahl von initialen Token aus initialen Feldwerten der initialen Datensätze erzeugt. In Block 304 werden diese initialen Token jeweils zu ein oder mehreren initialen Tokentypen zugeordnet, wobei alle initialen Tokenzuordnungen als gesicherte Fakten festgelegt werden. In Block 306 wird schließlich der des durchsuchbaren Index erzeugt unter Verwendung der Mehrzahl von initialen Token. Dabei umfasst der erzeugte Index die initialen Token in Verknüpfung mit einem oder mehreren Zeigern auf ein oder mehrere der gespeicherten initialen Datensätze und/oder Felder, aus deren initialen Feldwerten das entsprechende initiale Token erzeugt wurde. Ferner weisen die initialen Token in dem Index jeweils ein oder mehreren der als gesicherte Fakten festgelegten Tokenzuordnungen auf.

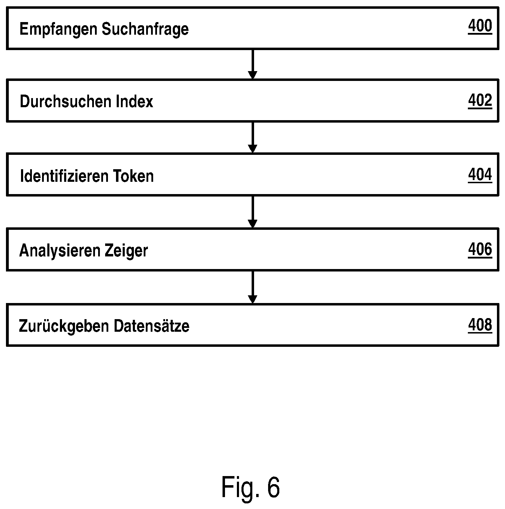

Figur 6 zeigt schließlich ein Flussdiagramm einer Ausführungsform eines exemplarischen Verfahrens zum Ausführen einer Suche auf der Datenbank. In Block 400 wird eine Suchanfrage empfangen, die einen Suchwert beinhaltet. Block 402 wird der Index nach dem Suchwert durchsucht und in Block 404 wird ein Token innerhalb des Index identifiziert, welcher identisch mit dem Suchwert ist. Nach Ausführungsformen kann der Suchwert neben einem Tokenwert auch eine aufzufindende Tokenzuordnung bzw. einen entsprechenden Tokentyp spezifizieren. In Block 406 werden Zeiger analysiert, mit denen der identifizierte Token verknüpft ist. Dadurch werden ein oder mehrere der Datensätze bestimmt, welche ein oder mehrere Feldwerte beinhalten, aus welchen das indizierte Token erzeugt wurde. In Block 408 werden die bestimmten Datensätze oder von ein oder mehreren Referenzen auf die bestimmten Datensätze als Antwort auf die Suchanfrage zurückgegeben.

### Bezugszeichenliste

- 100: Computersystem
- 102: Speicher
- 104: Datenbank
- 106: erstes Datenmodell
- 108: Datensätze
- 109: Token
- 110: zweites Datenmodell
- 111: Tokentyp
- 112: Index
- 113: Tokenzuordnung
- 114: Prozessor
- 115: Zeiger
- 116: Programminstruktionen
- 118: MM-DBMS
- 120: Lernmodul
- 122: Tokenisierer
- 124: Klassifizierer
- F1, ..., F8: Felder
- DS1, ..., DS3: Datensätze

## Patentansprüche

1. Computerimplementiertes Verfahren zum automatisierten maschinellen Lernen für eine Kraftfahrzeugüberwachung, wobei das Verfahren umfasst:
• Bereitstellen eines vortrainierten Lernmoduls (120) zum maschinellen Lernen,
• Bereitstellen einer Datenbank (104), welche von einem Multi-Modell-Datenbankmanagementsystem (118) verwaltet wird, wobei die Datenbank eine Mehrzahl von Datensätzen (108; DS1, ..., DS3) mit Messdaten einer Funktion des Kraftfahrzeugs umfasst, welche von einem Kraftfahrzeugcomputersystem des Kraftfahrzeugs unter Verwendung von Sensoren des Kraftfahrzeugs zur Erfassung von Zustandsdaten des Kraftfahrzeugs erfasst und in einem dokumentenorientierten Datenmodell (106) gespeichert sind, wobei die Messdaten umfassen: Drehzahl, Geschwindigkeit, Kraftstoffverbrauch, Abgaswerte, Getriebegang, Fehlermeldungen und Kennungen von elektronischen Komponenten des Kraftfahrzeugs, wobei die gespeicherten Datensätze jeweils ein oder mehreren Feldwerte umfassen, wobei die einzelnen Feldwerte der gespeicherten Datensätze jeweils in einem Feld (F1, ..., F8) gespeichert sind,
wobei die Datenbank ferner einen durchsuchbaren Index (112) umfasst, welcher in einem weiteren Datenmodell (110) gespeichert ist, wobei der Index eine Mehrzahl von aus den Feldwerten der gespeicherten Datensätze erzeugten Token (109) umfasst, wobei jedes der Token in dem Index jeweils mit einem oder mehreren Zeigern (115) auf ein oder mehrere der in dem dokumentenorientierten Datenmodell gespeicherten Datensätze verknüpft ist, aus deren Feldwerten das entsprechende Token erzeugt wurde, wobei die Zeiger jeweils einen Zugriff auf die für die Token jeweils relevanten Rohdaten bereitstellen, welche zur Auswertung der entsprechenden Token herangezogen werden, wobei die Token in dem Index jeweils ein oder mehreren Tokentypen (111) zugeordnet sind,
wobei zumindest eine Teilmenge der entsprechenden Tokenzuordnungen (113) als gesicherte Fakten klassifiziert sind, wobei die verbleibenden Tokenzuordnungen als vorläufige Annahmen klassifiziert sind,
• Empfangen eines zusätzlichen Datensatzes, bei welchem es sich um einen von dem Kraftfahrzeugcomputersystem des Kraftfahrzeugs unter Verwendung der Sensoren des Kraftfahrzeugs erfassten Datensatz handelt,
• Speichern des zusätzlichen Datensatzes, welcher ein oder mehrere zusätzliche Feldwerte umfasst, durch das Multi-Modell-Datenbankmanagementsystem in dem dokumentenorientierten Datenmodell der Datenbank,
• Erzeugen von ein oder mehreren Token aus den zusätzlichen Feldwerten,
• Zuordnen der zusätzlichen Token jeweils zu ein oder mehreren Tokentypen durch das Lernmodul,
• Klassifizieren der einzelnen Tokenzuordnungen der zusätzlichen Token jeweils als gesichertes Faktum oder vorläufige Annahme,
wobei das Klassifizieren umfasst:
∘ Abgleichen der Tokenzuordnungen der zusätzlichen Token mit dem Index,
∘ falls eine der Tokenzuordnungen eines der zusätzlichen Token in dem Index als gesichertes Faktum klassifiziert umfasst ist, Klassifizieren der entsprechenden Tokenzuordnung des entsprechenden zusätzlichen Tokens als gesichertes Faktum,
∘ falls eine der Tokenzuordnungen eines der zusätzlichen Token in dem Index nicht oder als vorläufige Annahme klassifiziert umfasst ist, Klassifizieren der entsprechenden Tokenzuordnung des entsprechenden zusätzlichen Tokens als vorläufige Annahme,
• Ergänzen des Index durch das Multi-Modell-Datenbankmanagementsystem unter Verwendung der zusätzlichen Token, eines Zeigers auf den zusätzlichen in dem dokumentenorientierten Datenmodell gespeicherten Datensatz, und der Tokenzuordnungen der zusätzlichen Token,
wobei das Verfahren ferner ein Umklassifizieren einer als eine vorläufige Annahme klassifizierten Tokenzuordnung eines Tokens in dem Index zu einem gesicherten Faktum umfasst, falls die entsprechende Tokenzuordnung ein vordefiniertes Kriterium erfüllt, wobei das vordefinierte Kriterium umfasst, dass eine Mehrzahl von Tokenzuordnungen, welche auf Feldwerten basieren, die in den gespeicherten Datensätzen jeweils innerhalb eines vordefinierten Abstands von den Feldwerten angeordnet sind, auf denen die entsprechende umzuklassifizierende Tokenzuordnung basiert, einen vordefinierten Mindestanteil an als gesicherte Fakten klassifizierten Tokenzuordnungen umfasst,
wobei das Lernmodul konfiguriert ist für eine Konsistenzprüfung zur Fehlfunktionserkennung unter Verwendung der Messdaten der Funktion des Kraftfahrzeugs und zum Ermöglichen einer vorausschauenden Wartung, wobei die Fehlfunktionserkennung eine Identifizierung einer Fehlerursache in Form einer ausgefallenen Komponente des Fahrzeugs umfasst, wobei Voraussetzung für eine erfolgreiche Konsistenzprüfung ist, dass ein geprüfter Datensatz mit den Messwerten ausschließlich gesicherte Fakten umfasst, wobei im Zuge der Konsistenzprüfung vorläufige Annahmen als solche identifiziert und hervorgehoben werden, wobei die vorläufigen Annahmen eine explizite Freigabe erfordern.

2. Computerimplementiertes Verfahren nach Anspruch 1, wobei das Ergänzen des Index umfasst:
• Abgleichen der zusätzlichen Token mit dem Index,
• falls eines der zusätzlichen Token nicht in dem Index umfasst ist, Ergänzen des entsprechenden zusätzlichen Tokens unter seinen Tokenzuordnungen in dem Index und Verknüpfen des entsprechenden zusätzlichen Tokens in dem Index mit dem Zeiger auf den zusätzlichen in dem dokumentenorientierten Datenmodell gespeicherten Datensatz,
• falls eine der Tokenzuordnungen eines in dem Index umfassten zusätzlichen Tokens von dem Index nicht umfasst sind, Ergänzen der entsprechenden Tokenzuordnung mit dem entsprechenden zusätzlichen Token in dem Index und Verknüpfen des entsprechenden zusätzlichen Tokens in dem Index mit dem Zeiger auf den zusätzlichen in dem dokumentenorientierten Datenmodell gespeicherten Datensatz,
• falls eines der zusätzlichen Token mit seinen Tokenzuordnungen in dem Index umfasst ist, Verknüpfen des entsprechenden zusätzlichen Tokens in dem Index mit dem Zeiger auf den zusätzlichen in dem dokumentenorientierten Datenmodell gespeicherten Datensatz.

3. Computerimplementiertes Verfahren nach einem der vorangehenden Ansprüche, wobei die Tokenzuordnungen der einzelnen Token in dem Index jeweils mit einem Flag versehen sind, welches anzeigt, ob es sich bei der entsprechenden Tokenzuordnung des entsprechenden Tokens um ein gesichertes Faktum oder eine vorläufige Annahme handelt.

4. Computerimplementiertes Verfahren nach einem der vorangehenden Ansprüche, wobei das Lernmodul zum Zuordnen der zusätzlichen Token zu Tokentypen jeweils anhand des Index bestimmt, welche Tokenzuordnungen für das entsprechende zusätzliche Token in dem Index bereits umfasst sind, und die so bestimmten Tokentypen zum Zuordnen verwendet, und/oder
wobei das Lernmodul zum Zuordnen der zusätzlichen Token zu Tokentypen jeweils anhand des Index alle gespeicherten Datensätze bestimmt, in welchen das entsprechende zusätzliche Token umfasst ist, und die so bestimmten Datensätze zum Zuordnen verwendet, und/oder
wobei das Lernmodul zum Zuordnen eines der zusätzlichen Token zu Tokentypen weitere zusätzliche Token heranzieht, für die weiteren zusätzlichen Token jeweils anhand des Index alle weiteren gespeicherten Datensätze bestimmt, in welchen die entsprechenden weiteren zusätzlichen Token umfasst sind, und die so bestimmten weiteren Datensätze zum Zuordnen verwendet.

5. Computerimplementiertes Verfahren nach einem der vorangehenden Ansprüche, wobei eine Änderung einer als ein gesichertes Faktum klassifizierten Tokenzuordnungen nur auf Basis ein oder mehrerer weiterer als gesicherte Fakten klassifizierten Tokenzuordnungen erfolgt und/oder
wobei die Zeiger, mit denen die Token in dem Index verknüpft gespeichert sind, jeweils auf ein oder mehrere der Feldwerte in den gespeicherten Datensätze verweisen.

6. Computerimplementiertes Verfahren nach einem der vorangehenden Ansprüche, wobei das Erzeugen der Token ein Anwenden einer Tokenisierungslogik (120) auf die Feldwerte des zusätzlichen Datensatzes umfasst, welche einen Volltextindizierer umfasst, der dazu konfiguriert ist, Texte in Wörter zu zerlegen und die Wörter als Token auszugeben, oder
wobei das Erzeugen der Token ein Anwenden einer Tokenisierungslogik auf die Feldwerte des zusätzlichen Datensatzes umfasst, welche einen generischen Tokenisierer umfasst, der dazu konfiguriert ist, in den Feldwerten Daten unterschiedlichen Datentyps zu erkennen und aus diesen Token in unterschiedlichen Datentypen zu erzeugen.

7. Computerimplementiertes Verfahren nach einem der vorangehenden Ansprüche, wobei die Feldwerte des zusätzlichen Datensatzes Textdaten, Bilddaten, Audiodaten und/oder Videodaten umfassen.

8. Computerimplementiertes Verfahren nach einem der vorangehenden Ansprüche, wobei das Verfahren ferner umfasst:
• Empfangen einer Suchanfrage, wobei die Suchanfrage einen Suchwert beinhaltet,
• Durchsuchen des Index nach dem Suchwert,
• Identifizieren eines Tokens innerhalb des Index, welcher identisch ist mit dem Suchwert,
• Analysieren von Zeigern, mit denen der identifizierte Token verknüpft ist, um ein oder mehrere der Datensätze zu bestimmen, welche ein oder mehrere Feldwerte beinhalten, aus welchen das indizierte Token erzeugt wurde,
• Zurückgeben der bestimmten Datensätze oder von ein oder mehreren Referenzen auf die bestimmten Datensätze als Antwort auf die Suchanfrage.

9. Computerimplementiertes Verfahren nach Anspruch 8, wobei der Suchwert ferner eine Zuordnung zu einem Tokentypen umfasst und das Identifizieren des Tokens innerhalb des Index ferner erfordert, dass der identifizierte Token dieselbe Tokenzuordnung aufweist.

10. Computerimplementiertes Verfahren nach einem der Ansprüche 8 bis 9, wobei bei der Suche in dem Index nur Tokenzuordnungen und Token mit Tokenzuordnungen berücksichtigt werden, welche als gesicherte Fakten klassifiziert sind.

11. Computerimplementiertes Verfahren nach einem der vorangehenden Ansprüche, wobei das Verfahren ferner das Vortrainieren des Lernmoduls umfasst, wobei das Vortrainieren umfasst:
• Bereitstellen einer Mehrzahl von initialen Datensätzen, welche durch das Multi-Modell-Datenbankmanagementsystem in dem dokumentenorientierten Datenmodell gespeichert werden, wobei die gespeicherten initialen Datensätzen jeweils ein oder mehreren initiale Feldwerte umfassen,
• Erzeugen einer Mehrzahl von initialen Token aus den initialen Feldwerten,
• Zuordnen der initialen Token jeweils zu ein oder mehreren initialen Tokentypen, wobei alle initialen Tokenzuordnungen als gesicherte Fakten festgelegt werden,
• Erzeugen des durchsuchbaren Index unter Verwendung der Mehrzahl von initialen Token durch das Multi-Modell-Datenbankmanagementsystem in dem weiteren Datenmodell, wobei der erzeugte Index die initialen Token umfasst, wobei jedes der initialen Token in dem Index jeweils mit einem oder mehreren Zeigern auf ein oder mehrere der in dem dokumentenorientierten Datenmodell gespeicherten initialen Datensätze verknüpft ist, aus deren initialen Feldwerten das entsprechende initiale Token erzeugt wurde, und wobei die initialen Token in dem Index jeweils ein oder mehreren der als gesicherte Fakten festgelegten Tokenzuordnungen aufweisen.

12. Computerimplementiertes Verfahren nach Anspruch 11, wobei ein oder mehrere der als gesicherte Fakten festgelegten initialen Tokenzuordnungen für das Vortrainieren des Lernmoduls als vordefinierte Zuordnungen vorgegebene werden und/oder wobei ein oder mehrere der als gesicherte Fakten festgelegten initialen Tokenzuordnungen im Zuge des Vortrainierens durch das Lernmodul bestimmt werden.

13. Computerimplementiertes Verfahren nach einem der vorangehenden Ansprüche, wobei der Index sämtliche aus den Feldwerten der gespeicherten Datensätze erzeugten Token so speichert, dass der Index jedes Token für jede der Tokenzuordnungen des entsprechenden Tokens genau einmal enthält, und/oder
wobei das weitere Datenmodell so strukturiert ist, dass die in dem weiteren Datenmodell gespeicherten Token und Tokenzuordnungen des Index die fünfte und/oder sechste Normalform erfüllen, und/oder
wobei es sich zumindest bei dem von dem Multi-Modell-Datenbankmanagementsystem zum Speichern der Datensätze verwendeten dokumentenbasierten Datenmodell um ein NoSQL-Datenmodell handelt.

14. Kraftfahrzeugcomputersystem (100) zum automatisierten maschinellen Lernen für eine Kraftfahrzeugüberwachung, wobei das Kraftfahrzeugcomputersystem ein oder mehrere Prozessoren (114), eine Datenbank (104), welche von ein oder mehrere Datenspeichermedien (102) bereitgestellt wird, ein Multi-Modell-Datenbankmanagementsystem (118), welches die Datenbank (104) verwaltet und dazu konfiguriert ist, eine Mehrzahl von Datensätzen (108; DS1, ..., DS2) mit Messdaten einer Funktion des Kraftfahrzeugs in einem dokumentenorientierten Datenmodell (106) in den Datenspeichermedien zu speichern, welche von dem Kraftfahrzeugcomputersystem des Kraftfahrzeugs unter Verwendung von Sensoren des Kraftfahrzeugs zur Erfassung von Zustandsdaten des Kraftfahrzeugs erfasst sind, wobei die Messdaten umfassen: Drehzahl, Geschwindigkeit, Kraftstoffverbrauch, Abgaswerte, Getriebegang, Fehlermeldungen und Kennungen von elektronischen Komponenten des Kraftfahrzeugs, wobei die gespeicherten Datensätze jeweils ein oder mehreren Feldwerte umfassen, wobei die einzelnen Feldwerte der gespeicherten Datensätze jeweils in einem Feld (F1, ..., F8) gespeichert werden, wobei die Feldwerte der gespeicherten Datensätze jeweils ein oder mehreren Feldtypen einer Mehrzahl unterschiedlicher Feldtypen zugeordnet sind, ein vortrainiertes Lernmodul (120) zum maschinellen Lernen und eine Programmlogik (116) umfasst,
wobei die Datenbank ferner einen durchsuchbaren Index (112) umfasst, welcher in einem weiteren Datenmodell (110) gespeichert ist, wobei der Index eine Mehrzahl von aus den Feldwerten der gespeicherten Datensätze erzeugten Token umfasst, wobei jedes der Token in dem Index jeweils mit einem oder mehreren Zeigern (115) auf ein oder mehrere der in dem dokumentenorientierten Datenmodell gespeicherten Datensätze verknüpft ist, aus deren Feldwerten das entsprechende Token erzeugt wurde, wobei die Zeiger jeweils einen Zugriff auf die für die Token jeweils relevanten Rohdaten bereitstellen, welche zur Auswertung der entsprechenden Token herangezogen werden, wobei die Token in dem Index jeweils ein oder mehreren Tokentypen (111) zugeordnet sind,
wobei zumindest eine Teilmenge der entsprechenden Tokenzuordnungen (113) als gesicherte Fakten klassifiziert sind, wobei die verbleibenden Tokenzuordnungen als vorläufige Annahmen klassifiziert sind,
wobei die Programmlogik (116) zum Ausführen eines Verfahrens zum automatisierten maschinellen Lernen konfiguriert ist, wobei das Verfahren umfasst:
• Empfangen eines zusätzlichen Datensatzes, bei welchem es sich um einen von dem Kraftfahrzeugcomputersystem des Kraftfahrzeugs unter Verwendung der Sensoren des Kraftfahrzeugs erfassten Datensatz handelt,
• Speichern des zusätzlichen Datensatzes, welcher ein oder mehrere zusätzliche Feldwerte umfasst, durch das Multi-Modell-Datenbankmanagementsystem in dem dokumentenorientierten Datenmodell der Datenbank,
• Erzeugen von ein oder mehreren Token aus den zusätzlichen Feldwerten,
• Zuordnen der zusätzlichen Token jeweils zu ein oder mehreren Tokentypen durch das Lernmodul,
• Klassifizieren der einzelnen Tokenzuordnungen der zusätzlichen Token jeweils als gesichertes Faktum oder vorläufige Annahme,
wobei das Klassifizieren umfasst:
o Abgleichen der Tokenzuordnungen der zusätzlichen Token mit dem Index,
o falls eine der Tokenzuordnungen eines der zusätzlichen Token in dem Index als gesichertes Faktum klassifiziert umfasst ist, Klassifizieren der entsprechenden Tokenzuordnung des entsprechenden zusätzlichen Tokens als gesichertes Faktum,
o falls eine der Tokenzuordnungen eines der zusätzlichen Token in dem Index nicht oder als vorläufige Annahme klassifiziert umfasst ist, Klassifizieren der entsprechenden Tokenzuordnung des entsprechenden zusätzlichen Tokens als vorläufige Annahme,
• Ergänzen des Index durch das Multi-Modell-Datenbankmanagementsystem unter Verwendung der zusätzlichen Token, eines Zeigers auf den zusätzlichen in dem dokumentenorientierten Datenmodell gespeicherten Datensatz, und der Tokenzuordnungen der zusätzlichen Token,
wobei das Verfahren ferner ein Umklassifizieren einer als eine vorläufige Annahme klassifizierten Tokenzuordnung eines Tokens in dem Index zu einem gesicherten Faktum umfasst, falls die entsprechende Tokenzuordnung ein vordefiniertes Kriterium erfüllt, wobei das vordefinierte Kriterium umfasst, dass eine Mehrzahl von Tokenzuordnungen, welche auf Feldwerten basieren, die in den gespeicherten Datensätzen jeweils innerhalb eines vordefinierten Abstands von den Feldwerten angeordnet sind, auf denen die entsprechende umzuklassifizierende Tokenzuordnung basiert, einen vordefinierten Mindestanteil an als gesicherte Fakten klassifizierten Tokenzuordnungen umfasst,
wobei das Lernmodul konfiguriert ist für eine Konsistenzprüfung zur Fehlfunktionserkennung unter Verwendung der Messdaten der Funktion des Kraftfahrzeugs und zum Ermöglichen einer vorausschauenden Wartung, wobei die Fehlfunktionserkennung eine Identifizierung einer Fehlerursache in Form einer ausgefallenen Komponente des Fahrzeugs umfasst, wobei Voraussetzung für eine erfolgreiche Konsistenzprüfung ist, dass ein geprüfter Datensatz mit den Messwerten ausschließlich gesicherte Fakten umfasst, wobei im Zuge der Konsistenzprüfung vorläufige Annahmen als solche identifiziert und hervorgehoben werden, wobei die vorläufigen Annahmen eine explizite Freigabe erfordern.

## Claims

1. A computer-implemented method for automated machine learning for motor vehicle monitoring, the method comprising:
• providing a pre-trained learning module (120) for machine learning,
• providing a database (104) managed by a multi-model database management system (118), wherein the database comprises a plurality of data records (108; DS1, ..., DS3) containing measurement data of a function of the motor vehicle, which are acquired by a motor vehicle computer system of the motor vehicle using sensors of the motor vehicle to acquire status data of the motor vehicle and are stored in a document-oriented data model (106), wherein the measurement data comprise: engine speed, vehicle speed, fuel consumption, exhaust emissions, transmission gear, error messages, and identifiers of electronic components of the motor vehicle, wherein the stored data records each comprise one or more field values, wherein the individual field values of the stored data records are each stored in a field (F1, ..., F8),
wherein the database further comprises a searchable index (112) stored in a further data model (110), wherein the index comprises a plurality of tokens (109) generated from the field values of the stored data records, wherein each of the tokens in the index is linked to one or more pointers (115) to one or more of the data records stored in the document-oriented data model from whose field values the corresponding token was generated, wherein the pointers each provide access to the raw data relevant to the tokens, which are used to evaluate the corresponding tokens, wherein the tokens in the index are each assigned to one or more token types (111),
wherein at least a subset of the corresponding token assignments (113) are classified as confirmed facts, wherein the remaining token assignments are classified as preliminary assumptions,
• receiving an additional data record, which is a data record captured by the motor vehicle computer system of the motor vehicle using the sensors of the motor vehicle,
• storing the additional data record, which comprises one or more additional field values, by the multi-model database management system in the document-oriented data model of the database,
• generating one or more tokens from the additional field values,
• assigning each of the additional tokens to one or more token types by the learning module,
• classifying the individual token assignments of the additional tokens respectively as a confirmed fact or a preliminary assumption,
wherein the classifying comprises:
∘ comparing the token assignments of the additional tokens with the index,
∘ if one of the token assignments of one of the additional tokens is included in the index classified as a confirmed fact, classifying the corresponding token assignment of the corresponding additional token as a confirmed fact,
∘ if one of the token assignments of one of the additional tokens is not included in the index or is included in the index classified as a preliminary assumption, classifying the corresponding token assignment of the corresponding additional token as a preliminary assumption,
• supplementing the index by the multi-model database management system using the additional tokens, a pointer to the additional data record stored in the document-oriented data model, and the token assignments of the additional tokens,
wherein the method further comprises reclassifying a token assignment in the index that has been classified as a preliminary assumption into a confirmed fact if the corresponding token assignment satisfies a predefined criterion, wherein the predefined criterion comprises that a plurality of token assignments, which are based on field values each located in the stored data records within a predefined distance from the field values on which the corresponding token assignment to be reclassified is based, comprise a predefined minimum proportion of token assignments classified as confirmed facts,
wherein the learning module is configured for a consistency check for malfunction detection using the measurement data of the function of the motor vehicle and for enabling predictive maintenance, wherein the malfunction detection comprises identifying a cause of failure in the form of a failed vehicle component, wherein a requirement for a successful consistency check is that a checked data record comprising the measurement values comprises exclusively confirmed facts, wherein, in the course of the consistency check, preliminary assumptions are identified and highlighted as such, wherein the preliminary assumptions require explicit approval.

2. The computer-implemented method of claim 1, wherein the supplementing of the index comprises:
• comparing the additional tokens with the index,
• if any of the additional tokens is not included in the index, adding the corresponding additional token to its token assignments in the index and linking the corresponding additional token in the index to the pointer to the additional data record stored in the document-oriented data model,
• if any of the token assignments of an additional token included in the index are not included in the index, adding the corresponding token assignment with the corresponding additional token to the index and linking the corresponding additional token in the index to the pointer to the additional data record stored in the document-oriented data model,
• if one of the additional tokens is included in the index along with its token assignments, linking the corresponding additional token in the index to the pointer to the additional data record stored in the document-oriented data model.

3. The computer-implemented method of any of the preceding claims, wherein the token assignments of the individual tokens in the index are each provided with a flag indicating whether the corresponding token assignment of the corresponding token is a confirmed fact or a preliminary assumption.

4. The computer-implemented method of any of the preceding claims, wherein the learning module, for assigning the additional tokens to token types, determines, in each case based on the index, which token assignments for the corresponding additional token are already included in the index, and uses the token types thus determined for the assigning, and/or
wherein the learning module, for assigning the additional tokens to token types, determines, in each case based on the index, all stored data records in which the corresponding additional token is included, and uses the data records thus determined for the assigning, and/or
wherein the learning module, for assigning one of the additional tokens to token types, draws upon further additional tokens, determines for each of the further additional tokens, based on the index, all further stored data records in which the corresponding further additional tokens are included, and uses the further data records thus determined for the assigning.

5. The computer-implemented method of any of the preceding claims, wherein a change to a token assignment classified as a confirmed fact occurs only on the basis of one or more further token assignments classified as confirmed facts, and/or
wherein the pointers, linked to which the tokens are stored in the index, each point to one or more of the field values in the stored data records.

6. The computer-implemented method of any of the preceding claims, wherein the generating of the tokens comprises applying a tokenization logic (120) to the field values of the additional data record, which comprises a full-text indexer configured to break down text into words and output the words as tokens, or
wherein the generating of the tokens comprises applying a tokenization logic to the field values of the additional data record, which comprises a generic tokenizer configured to recognize data of different data types in the field values and to generate tokens of different data types therefrom.

7. The computer-implemented method of any of the preceding claims, wherein the field values of the additional data record comprise text data, image data, audio data, and/or video data.

8. The computer-implemented method of any of the preceding claims, wherein the method further comprises:
• receiving a search query, wherein the search query includes a search value,
• searching the index for the search value,
• identifying a token within the index that is identical to the search value,
• analyzing pointers linked to the identified token to determine one or more of the data records containing one or more field values from which the indexed token was generated,
• returning the determined data records or one or more references to the determined data records in response to the search query.

9. The computer-implemented method of claim 8, wherein the search value further comprises an assignment to a token type, and the identifying of the token within the index further requires that the identified token has the same token assignment.

10. The computer-implemented method of any of claims 8 to 9, wherein, when searching the index, only token assignments and tokens with token assignments that are classified as confirmed facts are considered.

11. The computer-implemented method of any of the preceding claims, wherein the method further comprises pre-training the learning module, wherein the pre-training comprises:
• providing a plurality of initial data records which are stored by the multi-model database management system in the document-oriented data model, wherein the stored initial data records each comprise one or more initial field values,
• generating a plurality of initial tokens from the initial field values,
• assigning each of the initial tokens to one or more initial token types, wherein all initial token assignments are defined as confirmed facts,
• generating the searchable index using the plurality of initial tokens by the multi-model database management system in the further data model, wherein the generated index comprises the initial tokens, wherein each of the initial tokens in the index is linked to one or more pointers to one or more of the initial data records stored in the document-oriented data model from whose initial field values the corresponding initial token was generated, and wherein the initial tokens in the index each have one or more of the token assignments defined as confirmed facts.

12. The computer-implemented method of claim 11, wherein one or more of the initial token assignments defined as confirmed facts are provided as predefined assignments for the pre-training of the learning module, and/or wherein one or more of the initial token assignments defined as confirmed facts are determined by the learning module during the pre-training process.

13. The computer-implemented method of any of the preceding claims, wherein the index stores all tokens generated from the field values of the stored data records such that the index contains each token exactly once for each of the token assignments of the corresponding token, and/or
wherein the further data model is structured such that the tokens and token assignments of the index stored in the further data model satisfy the fifth and/or sixth normal form, and/or
wherein at least the document-based data model used by the multi-model database management system to store the data records is a NoSQL data model.

14. A motor vehicle computer system (100) for automated machine learning for motor vehicle monitoring, wherein the motor vehicle computer system comprises one or more processors (114), a database (104) provided by one or more data storage media (102), a multi-model database management system (118) that manages the database (104) and is configured to store a plurality of data records (108; DS1, ..., DS2) containing measurement data of a function of the motor vehicle in a document-oriented data model (106) in the data storage media, which are acquired by the motor vehicle computer system of the motor vehicle using sensors of the motor vehicle to acquire status data of the motor vehicle, wherein the measurement data comprise: engine speed, vehicle speed, fuel consumption, exhaust emissions, transmission gear, error messages, and identifiers of electronic components of the motor vehicle, wherein the stored data records each comprise one or more field values, wherein the individual field values of the stored data records are each stored in a field (F1, ..., F8), wherein the field values of the stored data records are each assigned to one or more field types from a plurality of different field types, a pre-trained learning module (120) for machine learning, and a program logic (116),
wherein the database further comprises a searchable index (112) stored in a further data model (110), wherein the index comprises a plurality of tokens generated from the field values of the stored data records, wherein each of the tokens in the index is linked to one or more pointers (115) to one or more of the data records stored in the document-oriented data model from whose field values the corresponding token was generated, wherein the pointers each provide access to the raw data relevant to the respective tokens, which are used to evaluate the corresponding tokens, wherein the tokens in the index are each assigned to one or more token types (111),
wherein at least a subset of the corresponding token assignments (113) are classified as confirmed facts, and the remaining token assignments are classified as preliminary assumptions,
wherein the program logic (116) is configured to execute a method for automated machine learning, wherein the method comprises:
• receiving an additional data record, which is a data record captured by the motor vehicle computer system of the motor vehicle using the sensors of the motor vehicle,
• storing the additional data record, which comprises one or more additional field values, by the multi-model database management system in the document-oriented data model of the database,
• generating one or more tokens from the additional field values,
• assigning each of the additional tokens to one or more token types by the learning module,
• classifying the individual token assignments of the additional tokens respectively as a confirmed fact or a preliminary assumption,
wherein the classifying comprises:
∘ comparing the token assignments of the additional tokens with the index,
∘ if one of the token assignments of one of the additional tokens is included in the index classified as a confirmed fact, classifying the corresponding token assignment of the corresponding additional token as a confirmed fact,
∘ if one of the token assignments of one of the additional tokens is not included in the index or is included in the index classified as a preliminary assumption, classifying the corresponding token assignment of the corresponding additional token as a preliminary assumption,
• supplementing the index by the multi-model database management system using the additional tokens, a pointer to the additional data record stored in the document-oriented data model, and the token assignments of the additional tokens,
wherein the method further comprises reclassifying a token assignment in the index that has been classified as a preliminary assumption into a confirmed fact if the corresponding token assignment satisfies a predefined criterion, wherein the predefined criterion comprises that a plurality of token assignments, which are based on field values each located in the stored data records within a predefined distance from the field values on which the corresponding token assignment to be reclassified is based, comprise a predefined minimum proportion of token assignments classified as confirmed facts,
wherein the learning module is configured for a consistency check for malfunction detection using the measurement data of the function of the motor vehicle and for enabling predictive maintenance, wherein the malfunction detection comprises identifying a cause of failure in the form of a failed vehicle component, wherein a requirement for a successful consistency check is that a checked data record containing the measurement values comprises exclusively confirmed facts, wherein, in the course of the consistency check, preliminary assumptions are identified and highlighted as such, and these preliminary assumptions require explicit approval.

## Revendications

1. Procédé mis en œuvre par ordinateur pour l'apprentissage automatique automatisé destiné à la surveillance d'un véhicule automobile, le procédé comprenant :
• la fourniture d'un module d'apprentissage pré-entraîné (120) pour l'apprentissage automatique ;
• la fourniture d'une base de données (104) gérée par un système de gestion de base de données multi-modèles (118), la base de données comprenant une pluralité d'enregistrements de données (108 ; DS1, ..., DS3) contenant des données de mesure d'une fonction du véhicule automobile, lesdites données étant acquises par un système informatique du véhicule automobile à l'aide de capteurs du véhicule automobile pour acquérir des données d'état du véhicule automobile et étant stockées dans un modèle de données orienté document (106),
les données de mesure comprenant : régime moteur, vitesse, consommation de carburant, valeurs d'émissions d'échappement, rapport de transmission, messages d'erreur et identifiants de composants électroniques du véhicule automobile,
les enregistrements de données stockés comprenant chacun une ou plusieurs valeurs de champ, les valeurs de champ individuelles étant chacune stockées dans un champ (F1, ..., F8) ;
la base de données comprenant en outre un index consultable (112), stocké dans un autre modèle de données (110),
l'index comprenant une pluralité de jetons (tokens) (109) générés à partir des valeurs de champ des enregistrements stockés,
chaque jeton dans l'index étant associé à un ou plusieurs pointeurs (115) vers un ou plusieurs des enregistrements stockés dans le modèle de données orienté document, à partir desquels le jeton correspondant a été généré,
lesdits pointeurs fournissant chacun un accès aux données brutes pertinentes pour les jetons correspondants, utilisées pour leur évaluation,
les jetons étant chacun associés à un ou plusieurs types de jetons (111),
au moins un sous-ensemble des attributions de jetons correspondantes (113) étant classé comme faits avérés, les attributions de jetons restantes étant classées comme hypothèses provisoires ;
• la réception d'un enregistrement de données supplémentaire, acquis par le système informatique du véhicule automobile à l'aide des capteurs du véhicule automobile ;
• le stockage de l'enregistrement de données supplémentaire, comprenant une ou plusieurs valeurs de champ supplémentaires, par le système de gestion de base de données multi-modèles dans le modèle de données orienté document de la base de données ;
• la génération d'un ou plusieurs jetons à partir des valeurs de champ supplémentaires ;
• l'attribution des jetons supplémentaires à un ou plusieurs types de jetons par le module d'apprentissage ;
• la classification de chaque attribution de jeton des jetons supplémentaires comme fait avéré ou hypothèse provisoire,
ladite classification comprenant :
∘ la comparaison des attributions de jetons des jetons supplémentaires avec l'index ;
∘ si une attribution de jeton d'un jeton supplémentaire est comprise dans l'index et y est classée comme fait avéré, classification de l'attribution correspondante du jeton supplémentaire comme fait avéré;
∘ si une attribution de jeton d'un jeton supplémentaire n'est pas comprise dans l'index ou y est classée comme hypothèse provisoire, classification de l'attribution correspondante du jeton supplémentaire comme hypothèse provisoire;
• le complément de l'index, par le système de gestion de base de données multi-modèles, en utilisant les jetons supplémentaires, un pointeur vers l'enregistrement supplémentaire stocké dans le modèle de données orienté document, et les attributions de jetons correspondantes ;
le procédé comprenant en outre : la reclassification d'une attribution de jeton d'un jeton dans l'index, initialement classée comme hypothèse provisoire, en fait avéré, lorsque ladite attribution satisfait à un critère prédéfini, ledit critère prédéfini comprenant le fait qu'une pluralité d'attributions de jetons, basées sur des valeurs de champ situées dans les enregistrements stockés à une distance prédéfinie des valeurs de champ sur lesquelles est basée l'attribution à reclassifier, comprend une proportion minimale prédéfinie d'attributions classées comme faits avérés;
le module d'apprentissage étant configuré pour : effectuer un contrôle de cohérence pour la détection de dysfonctionnements à l'aide des données de mesure de la fonction du véhicule automobile ; et permettre une maintenance prédictive;
la détection de dysfonctionnements comprenant l'identification d'une cause de défaut sous la forme d'un composant défaillant du véhicule, une condition préalable à un contrôle de cohérence réussi étant qu'un enregistrement de données analysé comprenant des valeurs de mesure ne comprenne que des faits avérés,
les hypothèses provisoires étant, au cours du contrôle de cohérence, identifiées et mises en évidence comme telles, lesdites hypothèses provisoires nécessitant une validation explicite.

2. Procédé selon la revendication 1, dans lequel le complément de l'index comprend :
• la comparaison des jetons supplémentaires avec l'index;
• si l'un des jetons supplémentaires n'est pas compris dans l'index, ajout du jeton supplémentaire correspondant avec ses attributions de jetons dans l'index et association du jeton supplémentaire correspondant dans l'index avec le pointeur vers l'enregistrement de données supplémentaire stocké dans le modèle de données orienté document;
• si une attribution de jeton d'un jeton supplémentaire compris dans l'index n'est pas comprise dans l'index, ajout de ladite attribution avec le jeton supplémentaire et association du jeton supplémentaire correspondant dans l'index avec le pointeur vers l'enregistrement de données supplémentaire stocké dans le modèle de données orienté document;
• si un jeton supplémentaire avec ses attributions est compris dans l'index, association du jeton supplémentaire correspondant dans l'index avec le pointeur vers l'enregistrement de données supplémentaire stocké dans le modèle de données orienté document.

3. Procédé selon l'une des revendications précédentes, dans lequel les attributions de jetons dans l'index sont chacune munies d'un indicateur indiquant si l'attribution de jeton correspondante du jeton correspondant est un fait avéré ou une hypothèse provisoire.

4. Procédé selon l'une des revendications précédentes, dans lequel le module d'apprentissage d'attribution des jetons supplémentaires aux types de jetons:
• détermine, à l'aide de l'index, quelles attributions de jetons sont déjà présentes pour un jeton supplémentaire et utilise les types de jetons ainsi déterminés pour l'attribution, et/ou
• détermine, à l'aide de l'index, tous les enregistrements de données stockés dans lesquels le jeton supplémentaire correspondant est compris, et utilise les enregistrements de données ainsi déterminés pour l'attribution, et/ou
• utilise d'autres jetons supplémentaires pour attribuer un jeton supplémentaire à des types de jetons, et détermine, à l'aide de l'index, tous les autres enregistrements de données stockés dans lesquels les autres jetons supplémentaires correspondants sont compris, et utilise les autres enregistrements ainsi déterminés pour l'attribution.

5. Procédé selon l'une des revendications précédentes, dans lequel :
une modification d'une attribution classée comme fait avéré n'est effectuée que sur la base d'une ou de plusieurs autres attributions classées comme faits avérés ; et/ou
les pointeurs associés aux jetons renvoient chacun à une ou plusieurs valeurs de champ dans les enregistrements stockés.

6. Procédé selon l'une des revendications précédentes, dans lequel :
la génération des jetons comprend l'application d'une logique de tokenisation (120) aux valeurs de champ de l'enregistrement de données supplémentaire, ladite logique comprenant un indexeur plein texte configuré pour décomposer des textes en mots et pour émettre lesdits mots sous forme de jetons, ou
la génération des jetons comprenant l'application d'une logique de tokenisation comprenant un tokeniseur générique configuré pour reconnaître, dans les valeurs de champ de l'enregistrement de données supplémentaire, des données de différents types de données et pour générer, à partir de celles-ci, des jetons de types de données différents.

7. Procédé selon l'une des revendications précédentes, dans lequel les valeurs de champ de l'enregistrement de données supplémentaire comprennent des données textuelles, des données d'image, des données audio et/ou des données vidéo.

8. Procédé selon l'une des revendications précédentes, comprenant en outre :
• la réception d'une requête de recherche comprenant une valeur de recherche ;
• le parcours de l'index à la recherche de la valeur de recherche ;
• l'identification d'un jeton dans l'index identique à la valeur de recherche ;
• l'analyse des pointeurs associés audit jeton identifié afin de déterminer un ou plusieurs enregistrements de données contenant une ou plusieurs valeurs de champ à partir desquelles le jeton indexé a été généré ;
• la restitution desdits enregistrements de données ou d'une ou plusieurs références auxdits enregistrements de données en réponse à la requête de recherche.

9. Procédé selon la revendication 8, dans lequel la valeur de recherche comprend en outre une attribution à un type de jeton et dans lequel l'identification du jeton dans l'index requiert en outre que le jeton identifié présente la même attribution de jeton que la valeur de recherche.

10. Procédé selon l'une des revendications 8 à 9, dans lequel seuls les jetons et les attributions de jetons dont les attributions sont classées comme faits avérés sont pris en compte.

11. Procédé selon l'une des revendications précédentes, comprenant en outre un pré-entraînement du module d'apprentissage, ledit pré-entraînement comprenant :
• la fourniture d'une pluralité d'enregistrements de données initiaux, stockés par le système de gestion de base de données multi-modèles dans le modèle de données orienté document, lesdits enregistrements comprenant chacun une ou plusieurs valeurs de champ initiales;
• la génération d'une pluralité de jetons initiaux à partir des valeurs de champ initiales;
• l'attribution des jetons initiaux à un ou plusieurs types de jetons initiaux, toutes les attributions étant définies comme faits avérés ;
• la génération de l'index consultable par le système de gestion de base de données multi-modèles dans ledit autre modèle de données, à partir de la pluralité de jetons initiaux, l'index généré comprenant les jetons initiaux, chaque jeton initial étant associé à un ou plusieurs pointeurs vers un ou plusieurs enregistrements de données initiaux stockés dans le modèle de données orienté document, à partir desquels le jeton initial correspondant a été généré, et les jetons initiaux dans l'index étant chacun associés à une ou plusieurs attributions de jetons définies comme faits avérés.

12. Procédé selon la revendication 11, dans lequel une ou plusieurs des attributions initiales de jetons définies comme faits avérés sont fournies en tant qu'attributions prédéfinies pour le pré-entraînement du module d'apprentissage, et/ou sont déterminées par le module d'apprentissage au cours du pré-entraînement.

13. Procédé selon l'une des revendications précédentes, dans lequel:
l'index stocke tous les jetons générés à partir des valeurs de champ des enregistrements de données stockés, de telle sorte que l'index contient chaque jeton exactement une fois pour chacune des attributions de jetons du jeton correspondant; et/ou
ledit autre modèle de données étant structuré de telle sorte que les jetons et les attributions de jetons de l'index stockés dans ledit autre modèle de données satisfont à la cinquième et/ou à la sixième forme normale; et/ou
au moins le modèle de données orienté document utilisé par le système de gestion de base de données multi-modèles est un modèle de données NoSQL.

14. Système informatique pour véhicule automobile (100) destiné à l'apprentissage automatique automatisé pour la surveillance d'un véhicule automobile, le système comprenant :
un ou plusieurs processeurs (114);
une base de données (104) fournie par un ou plusieurs supports de stockage de données (102);
un système de gestion de base de données multi-modèles (118), configuré pour gérer la base de données (104) et pour stocker une pluralité d'enregistrements de données (108 ; DS1, ..., DS2) contenant des données de mesure d'une fonction du véhicule automobile dans un modèle de données orienté document (106) dans les supports de stockage de données (102), lesdites données étant acquises par le système informatique du véhicule automobile à l'aide de capteurs du véhicule automobile pour acquérir des données d'état du véhicule automobile,
les données de mesure comprenant : régime moteur, vitesse, consommation de carburant, valeurs d'émissions d'échappement, rapport de transmission, messages d'erreur et identifiants de composants électroniques du véhicule automobile,
les enregistrements de données stockés comprenant chacun une ou plusieurs valeurs de champ, les valeurs de champ individuelles étant chacune stockées dans un champ (F1, ..., F8), lesdites valeurs de champ étant associées à un ou plusieurs types de champ parmi une pluralité de types de champ ;
un module d'apprentissage pré-entraîné (120) pour l'apprentissage automatique;
une logique de programme (116);
la base de données comprenant en outre :
un index consultable (112), stocké dans un autre modèle de données (110), l'index comprenant une pluralité de jetons (tokens) (109) générés à partir des valeurs de champ des enregistrements stockés,
chaque jeton dans l'index étant associé à un ou plusieurs pointeurs (115) vers un ou plusieurs des enregistrements stockés dans le modèle de données orienté document, à partir desquels le jeton correspondant a été généré,
lesdits pointeurs fournissant chacun un accès aux données brutes pertinentes pour les jetons correspondants, utilisées pour leur évaluation,
les jetons étant chacun associés à un ou plusieurs types de jetons (111),
au moins un sous-ensemble des attributions de jetons correspondantes (113) étant classé comme faits avérés, les attributions de jetons restantes étant classées comme hypothèses provisoires ;
la logique de programme (116) étant configurée pour exécuter un procédé d'apprentissage automatique automatisé comprenant :
• la réception d'un enregistrement de données supplémentaire, acquis par le système informatique du véhicule automobile à l'aide des capteurs du véhicule automobile ;
• le stockage de l'enregistrement de données supplémentaire, comprenant une ou plusieurs valeurs de champ supplémentaires, par le système de gestion de base de données multi-modèles dans le modèle de données orienté document de la base de données ;
• la génération d'un ou plusieurs jetons à partir des valeurs de champ supplémentaires ;
• l'attribution des jetons supplémentaires à un ou plusieurs types de jetons par le module d'apprentissage ;
• la classification de chaque attribution de jeton des jetons supplémentaires comme fait avéré ou hypothèse provisoire,
ladite classification comprenant :
∘ la comparaison des attributions de jetons des jetons supplémentaires avec l'index;
∘ si une attribution de jeton d'un jeton supplémentaire est comprise dans l'index et y est classée comme fait avéré, classification de l'attribution correspondante du jeton supplémentaire comme fait avéré;
∘ si une attribution de jeton d'un jeton supplémentaire n'est pas comprise dans l'index ou y est classée comme hypothèse provisoire, classification de l'attribution correspondante du jeton supplémentaire comme hypothèse provisoire;
• le complément de l'index, par le système de gestion de base de données multi-modèles, en utilisant les jetons supplémentaires, un pointeur vers l'enregistrement supplémentaire stocké dans le modèle de données orienté document, et les attributions de jetons correspondantes ;
le procédé comprenant en outre: la reclassification d'une attribution de jeton d'un jeton dans l'index, initialement classée comme hypothèse provisoire, en fait avéré, lorsque ladite attribution satisfait à un critère prédéfini,
ledit critère prédéfini comprenant le fait qu'une pluralité d'attributions de jetons, basées sur des valeurs de champ situées dans les enregistrements stockés à une distance prédéfinie des valeurs de champ sur lesquelles est basée l'attribution à reclassifier, comprend une proportion minimale prédéfinie d'attributions classées comme faits avérés;
le module d'apprentissage étant configuré pour: effectuer un contrôle de cohérence pour la détection de dysfonctionnements à l'aide des données de mesure de la fonction du véhicule automobile; et permettre une maintenance prédictive;
la détection de dysfonctionnements comprenant l'identification d'une cause de défaut sous la forme d'un composant défaillant du véhicule, une condition préalable à un contrôle de cohérence réussi étant qu'un enregistrement de données analysé comprenant des valeurs de mesure ne comprenne que des faits avérés, les hypothèses provisoires étant, au cours du contrôle de cohérence, identifiées et mises en évidence comme telles, lesdites hypothèses provisoires nécessitant une validation explicite.
